# EUROPÄISCHE PATENTSCHRIFT

(11) **EP 1 729 477 B1**
(45) Veröffentlichungstag und Bekanntmachung des Hinweises auf die Patenterteilung: **03.08.2011**
(21) Anmeldenummer: 06113060.5
(22) Anmeldetag: 25.04.2006
(51) Int. Cl.: H04L 29/06, H04M 7/00, H04M 1/253, H04L 29/12

(54) **Verfahren zum Aufbauen einer Verbindung über eine Kommunikationseinrichtung zu einer Endeinrichtung, sowie Endeinrichtung und Kommunikationseinrichtung zur Durchführung des Verfahrens**
Method for setting up a connection via a communication device to a terminal device, terminal device and communication device to carry out said method
Procédé pour initier une connection de communication à un terminal par la voie d'un dispositif de communication, terminal et dispositif de communication pour mettre en oeuvre ledit procédé

(30) Priorität: 30.05.2005 DE 102005024633
(43) Veröffentlichungstag der Anmeldung: 06.12.2006
(73) Patentinhaber: Siemens Enterprise Communications GmbH & Co. KG, 81379 München (DE)
(72) Erfinder: Ackermann-Markes, Achim, 82237, Wörthsee (DE); Brieskorn, Jürgen, 82269, Geltendorf (DE)
(74) Vertreter: Fritzsche, Thomas

(56) Entgegenhaltungen:
- EP-A- 1 453 280
- US-A1- 2003 063 612
- US-A1- 2004 160 947
- US-B1- 6 442 268
- US-B1- 6 466 662

## Beschreibung

An Büroarbeitsplätzen befinden sich üblicherweise ein Arbeitsplatzrechner, auch PC genannt, und ein Telefon. Dabei wird der Arbeitsplatzrechner i.d.R. an ein paketvermitteltes, lokales Datennetz LAN (LAN: Local Area Network) angeschlossen. Weiterhin unterstützt der Arbeitsplatzrechner häufig das sogenannte TCP/IP-Protokoll (TCP: Transmission Control Protocol, IP: Internet Protocol) für eine Datenkommunikation mit weiteren Arbeitsplatzrechnern oder Dienste-anbietenden Server-Rechnern, wobei eine Adressierung der Rechner innerhalb des Datennetzes über IP-Adressen erfolgt.

Handelt es sich bei dem Telefon um einen Bestandteil eines paketvermittelten Kommunikationssystems, so wird auch das Telefon üblicherweise über IP-Adressen adressiert und wird häufig als IP-Telefon oder IP-Endeinrichtung bezeichnet.

Dabei ist eine Verwendung von IP-Telefonen insofern vorteilhaft, als dass eine bestehende Infrastruktur eines bereits vorhandenen Datennetzwerks verwendet werden kann.

Bei Verwendung eines IP-Telefons und eines Arbeitsplatzrechners an einem Büroarbeitsplatz werden im Allgemeinen je Büroarbeitsplatz zwei IP-Adressen - für den Arbeitsplatzrechner und für das IP-Telefon - im Netzwerk eingerichtet, wohingegen bei Verwendung von leitungsorientierten Telefonen eines leitungsorientierten Kommunikationssystems lediglich eine einzige IP-Adresse für den Arbeitsplatzrechner benötigt wird.

In Datennetzwerken und in deren Subnetzwerken können lediglich eine begrenzte Anzahl von IP-Adressen vergeben werden. Somit kann es in Datennetzwerken mit insbesondere vielen IPbasierten Endeinrichtungen nachteilig sein, falls zu viele IP-Adressen zuzuweisen sind und somit wenig oder keine freien IP-Adressen zur Verfügung stehen.

Aufgrund derartiger Beschränkungen in der Anzahl der IP-Adressen in einem Datennetzwerk werden häufig Subnetzwerke gebildet, deren IP-Adressen nicht öffentlich bekannt gegeben werden und nur lokal gültig sind und somit von außerhalb des Subnetzwerkes nicht adressiert werden können. Man kann solche privaten IP-Adressen mehrfach vergeben, da die gleiche IP-Adresse in unterschiedlichen Subnetzwerken verwendet werden kann. Nachteilig ist dabei, dass Rechner oder IP-Telefone mit solchen privaten IP-Adressen von außerhalb des Subnetzwerks nicht adressiert werden können.

Weiterhin ist bekannt, dass z.B. Rechner oder Endeinrichtungen im Datennetzwerk häufig dynamisch jeweils eine IP-Adresse zugewiesen bekommen, sobald sie eingeschaltet und/oder aktiviert werden. Solche dynamisch zugewiesenen IP-Adressen werden üblicherweise wieder freigegeben, wenn der jeweilige Rechner oder die jeweilige Einrichtung deaktiviert und/oder ausgeschaltet wird. Das Zuweisen und/oder das Freigeben von IP-Adressen wird dabei häufig von einem sogenannten DHCP-Server durchgeführt (DHCP: Dynamic Host Configuration Protocol).

Aus der Patent-Veröffentlichung US 2004/0160947 A1 ist bekannt, dass sich mehrere Endeinrichtungen in einem Haus eines Benutzers eine gemeinsame IP-Adresse teilen können. Auf diese Weise kann eine Anzahl an verwendeten IP-Adressen reduziert werden.

Aus einer weiteren Patent-Veröffentlichung, US 2003/0063612 A1 ist darüber hinaus ein Gerät bekannt, das eine Kommunikation zu mehreren empfangsseitigen in einem lokalen Netzwerk angeordneten Telefone weiterleiten kann.

Es ist Aufgabe der vorliegenden Erfindung ein verbessertes Verfahren zum Aufbauen einer Verbindung zu einer ersten Endeinrichtung anzugeben, das mit wenigen IP-Adressen auskommt. Es ist weiterhin Aufgabe der Erfindung eine Endeinrichtung sowie eine Kommunikationseinrichtung zur Durchführung des Verfahrens anzugeben.

Gelöst wird diese Aufgabe durch ein Verfahren mit den Merkmalen nach Patentanspruch 1 sowie einer Kommunikationseinrichtung nach Patentanspruch 13 und einer Endeinrichtung nach Patentanspruch 14. Vorteilhafte Ausführungsformen und Weiterbildungen der Erfindung sind in den abhängigen Ansprüchen angegeben.

Bei dem erfindungsgemäßen Verfahren zum Aufbauen einer Verbindung zu einer Endeinrichtung wird die Endeinrichtung über ein paketorientiertes Netzwerk, insbesondere ein lokales Netzwerk LAN (Local Area Network) mit einer Kommunikationseinrichtung und einer Verbindungssteuerung gekoppelt. Die Endeinrichtung ist insbesondere ein IP-Telefon, ein sogenannter IP-Softclient als eine IP-Telefonanwendung oder eine PC-Multimediaapplikation. Die Verbindungssteuerung ist insbesondere ein Gatekeeper oder ein H.323- oder SIP-Gateway (H.323: Protokoll nach ITU-T-Empfehlung - ITU-T: International Telecommunication Union - Telecommunications Standardization Sector; SIP: Session Initiation Protocol). Die Kommunikationseinrichtung kann dabei vorzugsweise eine Software-Anwendung auf einem PC sein. Der Endeinrichtung ist eine Rufnummer zugeordnet, über die sie für eine Verbindung logisch adressierbar ist. Weiterhin ist der Endeinrichtung eine erste Hardware-Adresse, insbesondere eine MAC-Adresse (MAC: Media Access Control) oder eine Schicht-2-Adresse des OSI-Referenzmodells (OSI: Open Systems Interconnection) der ISO (International Standardization Organisation) zugeordnet, über die sie im Netzwerk adressierbar ist. Der Kommunikationseinrichtung ist eine zweite Hardware-Adresse zugeordnet, über die sie im Netzwerk adressierbar ist, wobei der zweiten Hardware-Adresse eine erste Netzwerk-Adresse, insbesondere eine IP-Adresse, eine Schicht-3-Adresse des OSI-Referenzmodells oder eine Adresse einer höheren Schicht, zugeordnet wird. Der Rufnummer werden die erste Netzwerk-Adresse sowie eine Zusatzinformation, insbesondere ein Adresszusatz, eine Port-Nummer, ein Adressanteil eines sogenannten Sockets und/oder ein Protokollzusatz durch die Verbindungssteuerung zugeordnet. Weiterhin wird der Zusatzinformation die erste Hardware-Adresse durch die Kommunikationseinrichtung zugeordnet. Die über die Rufnummer adressierte Verbindung zur Endeinrichtung wird aufgebaut, indem durch die Verbindungssteuerung die der Rufnummer zugeordnete, erste Netzwerk-Adresse und die der Rufnummer zugeordnete Zusatzinformation ermittelt werden und die der ermittelten, ersten Netzwerk-Adresse zugeordnete, zweite Hardware-Adresse ermittelt wird. Anhand dieser wird eine Teilverbindung zur durch die ermittelte zweite Hardware-Adresse adressierten, Kommunikationseinrichtung aufgebaut, wobei im Rahmen der Teilverbindung die ermittelte Zusatzinformation zur Kommunikationseinrichtung übermittelt wird. Infolge dieser Teilverbindung und abhängig von der übermittelten Zusatzinformation wird die diesem zugeordnete, erste Hardware-Adresse ermittelt. Mit dieser wird die Teilverbindung durch die Kommunikationseinrichtung zur Endeinrichtung weitervermittelt.

Eine jeweilige der Hardware-Adressen kann vorzugsweise eine der betreffenden Einrichtung fest und/oder unveränderlich zugeordnete Adresse sein. Diese feste Zuordnung kann insbesondere herstellerseitig vorgegeben sein, wie dies z.B. bei sogenannten MAC-Adressen der Fall ist. Die erste Netzwerk-Adresse kann der zweiten Hardware-Adresse vorzugsweise dynamisch zugeordnet sein, wobei diese Zuordnung in jedem im LAN vorhandenen Netzelement und/oder in einem DHCP-Server verwaltet und/oder gespeichert werden kann.

Die Zusatzinformation gemäß obiger Ausführung kann allgemein als Kriterium betrachtet werden, anhand dessen die Kommunikationseinrichtung entscheiden kann, für welche von mehreren Endeinrichtungen oder Anwendungen die Verbindungsanfrage bestimmt ist. Eine Unterscheidung zwischen den zu verbindenden Endeinrichtungen kann z.B. auch durch eine Unterscheidung unterschiedlicher verwendeter Protokolle erfolgen. Dabei soll so eine Unterscheidung anhand des Protokolls, anhand einer übermittelten Information im Rahmen des Protokolls oder anhand anderer Kriterien auch als Unterscheidung durch eine Zusatzinformation interpretiert werden, sofern mittels eines solchen Kriteriums verschiedene Endeinrichtungen adressiert werden können.

Dieses Verfahren ist insofern vorteilhaft, als dass für die Endeinrichtung und die Kommunikationseinrichtung nur eine einzige Netzwerk-Adresse benötigt wird, aber trotzdem beide Einrichtungen im Netzwerk adressierbar und für Dienste erreichbar sind.

Die erfindungsgemäße Kommunikationseinrichtung zum Aufbauen einer Verbindung über ein paketorientiertes Netzwerk zu einer, an die Kommunikationseinrichtung gekoppelten, gerufenen Endeinrichtung umfasst eine Servereinrichtung, eine Weitervermittlungseinheit, eine Netzwerk-Adressen-Ermittlungseinheit, eine Anmeldeeinheit und eine Abmeldeeinheit. Der Endeinrichtung ist dabei die Rufnummer zugeordnet, über die sie für eine Verbindung logisch adressierbar ist. Weiterhin ist der Endeinrichtung die erste Hardware-Adresse zugeordnet, über die sie im Netzwerk adressierbar ist. Der Kommunikationseinrichtung ist die zweite Hardware-Adresse zugeordnet, über die die Kommunikationseinrichtung im Netzwerk adressierbar ist. Die Servereinrichtung dient zum Aufrufen einer einer Zusatzinformation zugeordneten Weitervermittlungseinheit infolge einer eingehenden, über die Rufnummer adressierten Teilverbindung und abhängig von der übermittelten Zusatzinformation. Die Kommunikationseinrichtung umfasst weiterhin der einer Zusatzinformation zugeordneten Weitervermittlungseinheit, zum Ermitteln der ersten Hardware-Adresse der gerufenen Endeinrichtung und zum Weitervermitteln der Teilverbindung zur Endeinrichtung anhand der ermittelten, ersten Hardware-Adresse. Die Netzwerk-Adressen-Ermittlungseinheit dient zum Zuordnen der zweiten Hardware-Adresse zu einer Netzwerk-Adresse und/oder zum Abfragen der Netzwerk-Adresse. Die Anmeldeeinheit dient zum Übermitteln der Rufnummer, der Netzwerk-Adresse und einer die Kommunikationseinrichtung ansteuernde Zusatzinformation in einer Registrierungsmeldung an eine Verbindungssteuerung im Rahmen eines Aktivierens der Kommunikationseinrichtung. Darüberhinaus dient der Abmeldeeinheit zum Übermitteln der Rufnummer und/oder der Netzwerk-Adresse und der Zusatzinformation in einer Deregistrierungsmeldung an die Verbindungssteuerung im Rahmen eines Deaktivierens der Kommunikationseinrichtung.

Die erfindungsgemäße Endeinrichtung, die an eine Verbindungssteuerung über ein paketorientiertes Netzwerk und an eine Kommunikationseinrichtung - z.B. direkt oder über zwischengeschaltete Netzelemente - gekoppelt ist, umfasst eine Erkennungseinheit, eine Anmeldeeinheit und eine Abmeldeeinheit. Der Endeinrichtung ist die Rufnummer zugeordnet, über die sie für eine Verbindung logisch adressierbar ist. Weiterhin ist der Endeinrichtung die erste Hardware-Adresse zugeordnet, über die sie im Netzwerk adressierbar ist, wobei der Hardware-Adresse die erste Netzwerk-Adresse zugeordnet wird, und die Endeinrichtung über eine Zusatzinformation ansteuerbar ist. Die Erkennungseinheit dient zum Erkennen eines Aktivierens und/oder eines Deaktivierens der Kommunikationseinrichtung aufgrund einer eingehenden Meldung von der Kommunikationseinrichtung oder eines Empfangs oder Ausbleibens von Daten-Transportmeldungen von der Kommunikationseinrichtung. Die Anmeldeeinheit dient zum Übermitteln der Netzwerk-Adresse und einer die Endeinrichtung ansteuernden Zusatzinformation in einer Registrierungsmeldung an die Verbindungssteuerung abhängig vom Erkennen des Deaktivierens der Kommunikationseinrichtung, wohingegen die Abmeldeeinheit zum Übermitteln der Netzwerk-Adresse und der Zusatzinformation in einer Deregistrierungsmeldung an eine Verbindungssteuerung abhängig vom Erkennen des Aktivierens der Kommunikationseinrichtung dient.

In einer vorteilhaften Ausführungsform der Erfindung sind die Kommunikationseinrichtung und die Endeinrichtung im selben Kommunikationsgerät, insbesondere als Software-Komponenten auf einem PC, enthalten. Da der PC an heutzutage üblichen Arbeitsplätzen vorhanden ist, kann somit das Verfahren ohne Verwendung zusätzlicher Bauteile und/oder Geräte durchgeführt werden.

Weitere vorteilhafte Weiterbildungen der Erfindung umfassen Verfahrensschritte zum Deaktivieren, insbesondere Ausschalten, der Kommunikationseinrichtung sowie zum Aktivieren, insbesondere Einschalten, der deaktivierten Kommunikationseinrichtung, wobei diesen Ausführungsformen gemeinsam ist, dass keine oder nur für eine kurze Zeitdauer eine zusätzliche Netzwerk-Adresse verwendet und einer Hardware-Adresse zugeordnet wird.

Weitere vorteilhafte Ausführungsformen der Erfindung umfassen Verfahrensschritte, bei denen vorzugsweise ein Leistungsmerkmal der Verbindungssteuerung oder einer evtl. vorhandenen Kommunikationsanlage verwendet wird, bei dem einer Endeinrichtung mehrere Rufnummern zugeordnet werden können und/oder mehreren Endeinrichtungen eine gemeinsame Rufnummer zugeordnet werden kann. Ein solches Leistungsmerkmal wird auch "Multiple Line Appearances" genannt und dessen Verwendung unterstützt vorteilhafterweise ein Aktivieren und/oder Deaktivieren der Kommunikationseinrichtung mit permanenter Erreichbarkeit der Endeinrichtung.

In einer weiteren vorteilhaften Ausführungsform der Erfindung ist ein Adress-Server, insbesondere ein DHCP-Server zum Verwalten und Vergeben von Netzwerk-Adressen vorgesehen. Dies ist insofern vorteilhaft, als dass, falls gewünscht, einer Einrichtung im aktiven Zustand immer dieselbe Netzwerk-Adresse zugewiesen werden kann und dass, insofern eine Zuordnung von Netzwerk-Adresse zu Hardware-Adresse aufgehoben wird, diese Netzwerk-Adresse vom Adress-Server für die Verwendung durch andere Rechner oder Endeinrichtungen freigegeben werden kann.

Bei den genannten erfindungsgemäßen Verfahren und Einrichtungen ist insofern vorteilhaft, als dass die Endeinrichtung permanent erreichbar bleibt. Dies wird häufig als "Always on" bezeichnet. Somit ist die Endeinrichtung insbesondere für Sprachkommunikation auch dann erreichbar, falls der an einem Arbeitsplatz befindliche PC mit der Kommunikationseinrichtung ausgeschaltet ist.

Weiterhin ist vorteilhaft, dass in der Kommunikationseinrichtung eine Aufteilung und/oder Weiterleitung von Verbindungen zu weiteren Anwendungen realisiert werden kann und somit erweiterte Anwendungen im Rahmen von Realtime-Kommunikation, wie z.B. "Application Sharing", Multimedia-Konferenzen, "Instant Messaging"-Anwendungen durch Zusammenwirken einer PC-Anwendung mit der erfindungsgemäßen Endeinrichtung gebildet werden können.

Ausführungsbeispiele der Erfindung werden nachfolgend anhand der Zeichnung näher erklärt.

Dabei zeigen jeweils in schematischer Darstellung die
- Figuren 1 bis 13: ein Kommunikationssystem mit einer Kommunikationseinrichtung, zwei Endeinrichtungen, einem Gatekeeper und einen DHCP-Server, sowie deren Konfigurationstabellen in unterschiedlichen Verfahrensphasen und
- Figur 14: die Komponenten der erfindungsgemäßen Kommunikationseinrichtung und der erfindungsgemäßen Endeinrichtung.

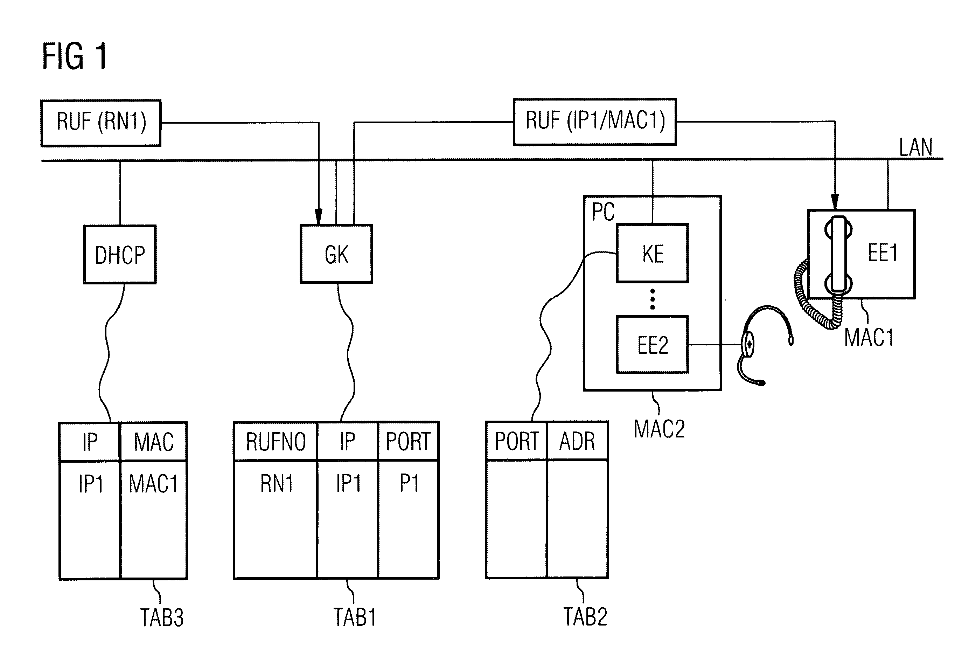

In den Figuren 1 bis 13 ist ein Kommunikationssystem mit einer Kommunikationseinrichtung KE, einem Gatekeeper GK als Verbindungssteuerung, einer ersten Endeinrichtung EE1, einer zweiten Endeinrichtung EE2 und einem DHCP-Server DHCP als Adress-Server schematisch dargestellt. Die erste Endeinrichtung EE1 ist dabei beispielsweise ein IP-Telefon, die zweite Endeinrichtung EE2 eine Telefonapplikation, auch Soft-Client genannt. Die Kommunikationseinrichtung KE und die zweite Endeinrichtung EE2 sind in den vorliegenden Ausführungsbeispielen Soft- und/oder Hardware-Bestandteile eines Rechners PC. Der Rechner PC und die erste Endeinrichtung EE1 sind vorzugsweise im selben Raum angeordnet oder befinden sich gemeinsam an einem Arbeitsplatz eines Benutzers.

Die erste Endeinrichtung EE1 wird insbesondere über ein sogenanntes Telefonie-Stimulus-Protokoll vom Gatekeeper GK oder einer im Kommunikationssystem vorhandenen Kommunikationsanlage (nicht dargestellt) gesteuert. Dabei ist insofern vorteilhaft, als dass das Telefonie-Stimulus-Protokoll die Kontrolle und/oder die Steuerung der ersten Endeinrichtung EE1 in den Gatekeeper GK und/oder die Kommunikationsanlage verlagert.

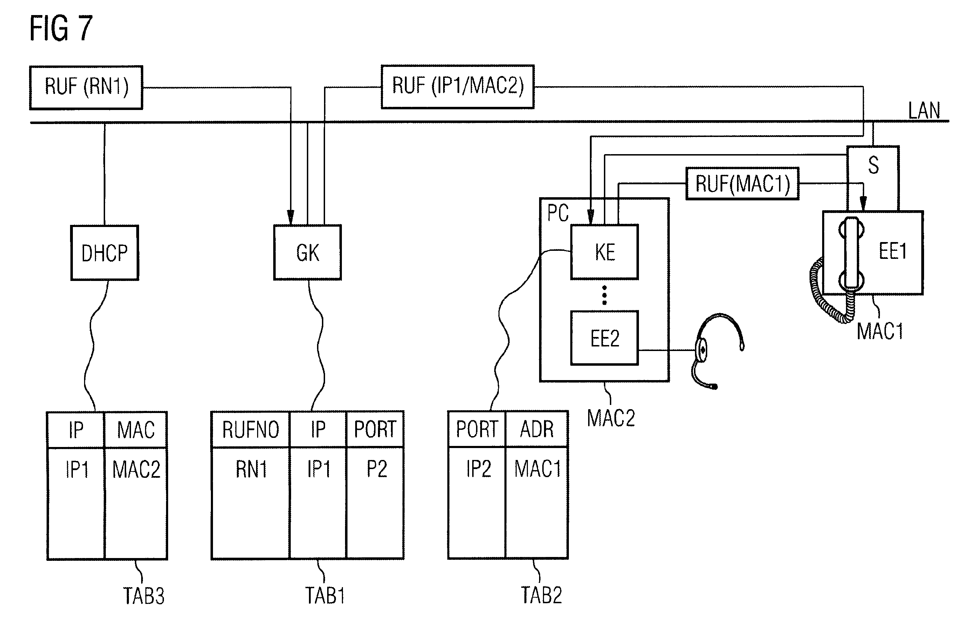

Der Gatekeeper GK, die erste Endeinrichtung EE1 und der DHCP-Server DHCP sind über ein paketorientiertes Netzwerk, vorzugsweise über ein internetprotokollbasiertes, lokales Netzwerk LAN einer Firma oder Organisation gekoppelt. In den Figuren 1-6,8-13 ist weiterhin die Kommunikationseinrichtung KE an das lokales Netzwerk LAN gekoppelt, während Figur 7 in einer alternativen Ausgestaltung eine Kopplung der Kommunikationseinrichtung KE über einen, vorzugsweise in der ersten Endeinrichtung EE1 enthaltenen, IP-Switch S an die erste Endeinrichtung EE1 schematisch darstellt. Wobei der IP-Switch S LAN-seitig eingehende Pakete zur ersten Endeinrichtung EE1 und zur Kommunikationseinrichtung KE weiterleitet.

Weiterhin sind in den Figuren 1-13 in den genannten Komponenten enthaltene, für die vorliegenden Ausführungsbeispiele relevante Konfigurationstabellen schematisch dargestellt. Dabei ist die Realisierung als Tabelle lediglich eine mögliche von mehreren alternativen Methoden zur Zuordnung von Werten.

Eine Gatekeeper-Tabelle TAB1 wird vom Gatekeeper GK gelesen und geschrieben und speichert eine Zuordnung von Rufnummern RUFNO zu IP-Adressen IP als Netzwerk-Adressen und von Netzwerk-Ports PORT als Zusatzinformationen. Der DHCP-Server liest und schreibt eine DHCP-Tabelle TAB3 und speichert darin eine Zuordnung von den IP-Adressen IP zu Hardware-Adressen MAC - im vorliegenden Ausführungsbeispiel sogenannte MAC-Adressen. Weiterhin werden Netzwerk-Elemente, insbesondere der Gatekeeper GK, im lokalen Netzwerk LAN über das sogenannte ARP-Protokoll (ARP: Address Resolution Protocol) über diese Zuordnung informiert, um in diesem Netzwerk-Element eine Adressauflösung von IP-Adressen zu MAC-Adressen durchführen zu können.

Der Ort der Speicherung der jeweiligen Tabellen kann in Realisierungen des Verfahrens von der schematischen Darstellung in den Figuren abweichen. So kann der Gatekeeper GK die Zuordnung der Werte der Gatekeeper-Tabelle TAB1 von einer weiteren Komponente im Netz, z.B. einem Datenserver oder einer leitungsorientierten Kommunikationsanlage, abfragen.

Alternativ zur Realisierung mittels Netzwerk-Ports kann die Zusatzinformation z.B. das verwendete Protokoll sein, so dass insbesondere eingehende RTP-Pakete einer Sprachverbindung unabhängig eines adressierten Netzwerk-Ports zur ersten Endeinrichtung EE1 weitergeleitet werden, währenddessen beispielsweise eine SMTP-Verbindungen zu einer E-Mail-Anwendung geleitet werden kann. Darüberhinaus kann die Zusatzinformation eine weitere Information einer im Rahmen eines Verbindungsaufbaus übermittelten Information sein.

Weiterhin können als Netzwerk-Ports in den Tabellen der Figuren auch Bereiche von gültigen Netzwerk-Ports angegeben werden.

Die Kommunikationseinrichtung KE verwaltet eine Zuordnung von Netzwerk-Ports PORT zu Adressen ADR von an ihr über das lokale Netzwerk LAN oder direkt gekoppelte Endeinrichtungen. Diese Adressen ADR können MAC-Adressen von Endeinrichtungen, aus MAC-Adressen und Netzwerk-Ports - sogenannte Sockets oder Kommunikationsendpunkte -gebildete Tupel, oder Einsprungadressen oder Prozess-Nummern von Endeinrichtungen oder Applikationen sein, die als Software-Komponenten auf dem Rechner PC ablaufen. In den vorliegenden Ausführungsbeispielen sei angenommen, dass die zweite Endeinrichtung EE2 als Software-Komponente ausgestaltet ist und dass die Kommunikationseinrichtung KE mit einer Einsprungadresse EE2A die zweite Endeinrichtung EE2 adressieren und über diese mit ihr kommunizieren kann.

Eine Adressierung von paketvermittelten Verbindungen, insbesondere Sprachverbindungen können in den vorliegenden Ausführungsbeispielen abhängig von dem verwendeten Protokoll und/oder abhängig von der Schicht des verwendeten Protokolls im OSI-Referenzmodell anhand einer Rufnummer, anhand einer IP-Adresse und/oder anhand einer MAC-Adresse durchgeführt werden. Dabei wird bei MAC-Adressierung die erste Endeinrichtung EE1 über eine erste MAC-Adresse MAC1 als erste Hardware-Adresse im Netzwerk adressiert. Der Rechner PC und die Kommunikationseinrichtung KE werden über eine zweite MAC-Adresse MAC2 als zweite Hardware-Adresse im Netzwerk adressiert. Diese jeweiligen MAC-Adressen MAC1,MAC2 seien dabei der ersten Endeinrichtung EE1 und dem Rechner PC - und somit auch der Kommunikationseinrichtung KE - oder deren Netzwerkkomponenten fest und unveränderlich zugeordnet.

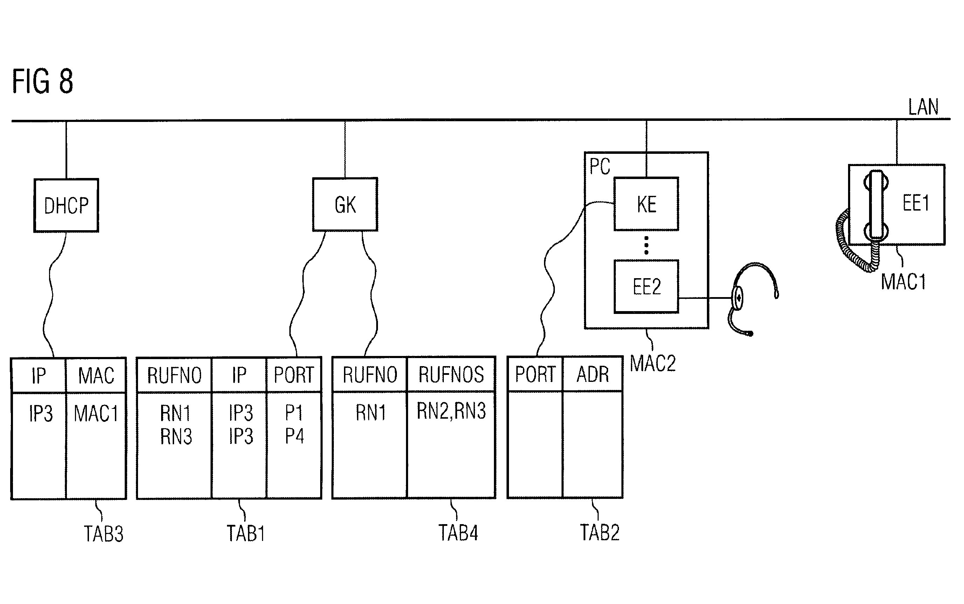

In den Figuren 8-13 ist darüber hinaus eine zweite Gatekeeper-Tabelle TAB4 schematisch dargestellt, die eine Zuordnung zwischen einer Hauptrufnummer RUFNO und Nebenrufnummern RUFNOS im Rahmen eines "Multiple Line Appearances"-Leistungsmerkmals verwaltet (Multiple Line Appearances: mehrere Leitungen und mehrere Rufnummern, die einem Gerät zugewiesen werden können; ein Anruf kann zu mehreren Endeinrichtungen signalisiert werden und/oder ein Gerät kann über mehrere Rufnummer erreicht werden).

Figur 1 repräsentiert den Stand der Technik und veranschaulicht ein Aufbauen einer Verbindung RUF, insbesondere eine Sprach- oder Multimedia-Verbindung, initiiert durch einen nicht dargestellten, rufenden Kommunikationspartner. Dieser ist z.B. eine IP-Endeinrichtung oder ein IP-Gateway einer Kommunikationsanlage. Im dargestellten Betriebszustand, der übrigens auch im Rahmen der Erfindung eingenommen werden kann, sind der Rechner PC sowie die enthaltene Kommunikationseinrichtung KE und die zweite Endeinrichtung EE2 inaktiv. Darüberhinaus sei angenommen, dass der rufende Kommunikationspartner die Verbindung RUF zur ersten Endeinrichtung EE1 aufbauen möchte. Weiterhin sei die erste Endeinrichtung EE1 aktiv und erreichbar. Der ersten Endeinrichtung sei eine Rufnummer RN1 zugeordnet, über die sie für die Verbindung RUF logisch adressierbar ist. Die Adressierung der Verbindung RUF erfolgt über die Rufnummer RN1, die als Parameter in einer Verbindungsaufbaumeldung übermittelt wird. Die Verbindungsaufbaumeldung wird an den Gatekeeper GK geleitet.

Der Gatekeeper GK ermittelt aus der Gatekeeper-Tabelle TAB1 für die erhaltene Rufnummer RN1 die dynamisch zugeordnete, erste IP-Adresse IP1 und den ersten Netzwerk-Port P1, über die die erste Endeinrichtung EE1 eingehende Verbindungen akzeptieren kann. Mittels der ersten IP-Adresse IP1 wird daraufhin der Verbindungsaufbau zur ersten Endeinrichtung EE1 initiiert. Dabei erfolgt die Adressierung vom Gatekeeper GK zur ersten Endeinrichtung EE1 mithilfe der ersten IP-Adresse IP1. Im Gatekeeper GK oder in einem im Übertragungspfad befindlichen, nicht dargestellten Netzwerk-Element erfolgt eine Umsetzung von der ersten IP-Adresse IP1 zur ersten MAC-Adresse MAC1 basierend auf der Konfiguration im DHCP-Server DHCP, in dem in der DHCP-Tabelle TAB3 die erste IP-Adresse IP1 der ersten MAC-Adresse MAC1 zugeordnet ist. Mit dieser Information erfolgt die Adressierung der Verbindung RUF zumindest von einem Netzwerk-Element oder dem Gatekeeper GK über die erste MAC-Adresse MAC1. Die Verbindung erreicht die ersten Endeinrichtung EE1 über die erste MAC-Adresse MAC1 und dem ermittelten ersten Netzwerk-Port P1. Die ersten Endeinrichtung EE1 kann im Folgenden die Verbindung annehmen und eine Nutzdatenkommunikation zwischen dem rufenden Kommunikationspartner und der ersten Endeinrichtung EE1 ist möglich.

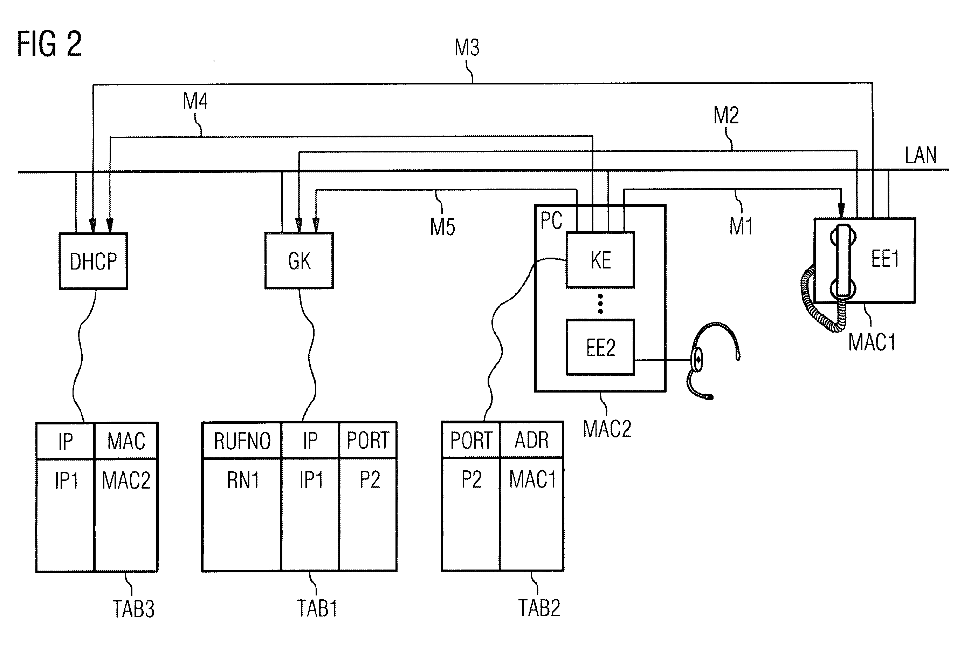

Figur 2 veranschaulicht ein erfindungsgemäßes Kommunikationssystem, bei einer Aktivierung des Rechners PC. Durch die Aktivierung des Rechners PC und somit der Kommunikationseinrichtung KE wird eine Meldung M1 an die erste Endeinrichtung EE1 geschickt, die diese informiert, dass der Rechner PC im Folgenden aktiviert wird. Dies ist möglich, da die erste Endeinrichtung EE1 der Kommunikationseinrichtung KE bekannt gemacht wurde. Alternativ oder zusätzlich ist auch ein Polling-Verfahren ausgehend von der ersten Endeinrichtung EE1 möglich. Die ersten Endeinrichtung EE1 sendet daraufhin eine Abmelde-Meldung M2 zum Freigeben der Rufnummer RN1 an den Gatekeeper GK sowie eine Abmelde-Meldung M3 zum Freigeben der ersten IP-Adresse IP1 an den DHCP-Server DHCP. Der Gatekeeper GK und der DHCP-Server DHCP aktualisieren die jeweilige Gatekeeper-Tabelle TAB1 und DHCP-Tabelle TAB3 vorzugsweise durch Löschen von Einträgen für die IP-Adresse IP1. Die Meldungen M2 und M3 umfassen hierbei vorzugsweise die IP-Adresse IP1 als Parameter.

Anschließend oder später - z.B. verzögert durch einen Zeitgeber oder durch eine nicht dargestellte Benachrichtigung von der ersten Endeinrichtung EE1 - sendet der Rechner PC in einer Initialisierungsphase eine nicht dargestellte Broadcast-Meldung mit seiner zweiten MAC-Adresse MAC2 zur Benachrichtigung des DHCP-Servers DHCP. Der DHCP-Server DHCP bietet daraufhin dem Rechner PC bei entsprechender Konfiguration die erste IP-Adresse IP1 an (nicht dargestellt) und der Rechner PC akzeptiert dies mittels der Meldung M4 zum Zuordnen der ersten IP-Adresse IP1 zur zweiten MAC-Adresse MAC2 an den DHCP-Server DHCP. Daraufhin trägt der DHCP-Server DHCP die Zuordnung von der ersten IP-Adresse IP1 zur zweiten MAC-Adresse MAC2 in die DHCP-Tabelle TAB3 ein. Dies wird weiterhin den im Netzwerk beteiligten Netzwerk-Elementen mitgeteilt (nicht dargestellt). Anschließend oder parallel dazu meldet sich die Kommunikationseinrichtung KE mittels einer Meldung M5 mit der ersten IP-Adresse IP1, einem zweiten Netzwerk-Port P2 als Zusatzinformation und der Rufnummer RN1 als Parameter beim Gatekeeper GK an. Dieser trägt daraufhin in die Gatekeeper-Tabelle TAB1 die Zuordnung der Rufnummer RN1 zur ersten IP-Adresse IP1 und zu dem Netzwerk-Port P2 ein und speichert diese im Gatekeeper GK. Der zweite Netzwerk-Port P2 ist dabei ein gültiger, die Kommunikationseinrichtung KE ansteuernder Netzwerk-Port des Rechners PC, anhand dem erkannt werden kann, für welche Anwendung des Rechners eine eingehende Kommunikation bestimmt ist.

Weiterhin speichert die Kommunikationseinrichtung KE, dass bei eingehenden Verbindungen zum zweiten Netzwerk-Port P2 eine Verbindung zur ersten Endeinrichtung EE1 aufgebaut werden soll, wobei die ersten Endeinrichtung EE1 über deren MAC-Adresse MAC1 adressiert wird. Diese Zuordnung von zweitem Netzwerk-Port P2 zur ersten MAC-Adresse MAC1 wird in Figur 2 als eine Kommunikationseinrichtungstabelle TAB2 dargestellt. Dies kann aber auch als einfache "wenn-dann"-Logik oder mit Hilfe einer Sprungtabelle implementiert sein.

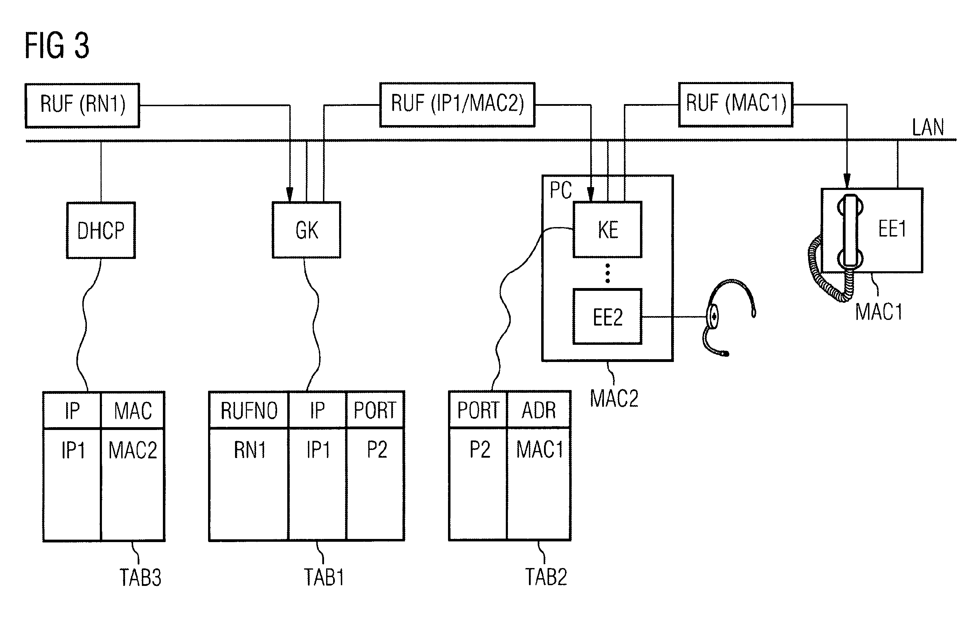

Nach Abschluss der genannten erfindungsgemäßen Verfahrensschritte, wird für den Rechner PC und die ersten Endeinrichtung EE1 gemeinsam nur eine einzige IP-Adresse, die erste IP-Adresse IP1, zugeordnet. Einen Rufaufbau mit nur dieser einen IP-Adresse wird in Figur 3 dargestellt, ausgehend von einer Konfiguration wie oben beschrieben.

Figur 3 stellt ein erfindungsgemäßes Aufbauen der Verbindung RUF initiiert durch einen nicht dargestellten, rufenden Kommunikationspartner dar, wobei erfindungsgemäß die Verbindung RUF über die aktivierte Kommunikationseinrichtung KE an die erste Endeinrichtung EE1 weitergeleitet wird. Die über die Rufnummer RN1 adressierte Verbindung RUF zur gerufenen ersten Endeinrichtung EE1 wird vom rufenden Kommunikationspartner zum Gatekeeper GK aufgebaut. Der Gatekeeper GK ermittelt aus der Gatekeeper-Tabelle TAB1 für die erhaltene Rufnummer RN1 die der Rufnummer RN1 zugeordnete erste IP-Adresse IP1 und den der Rufnummer RN1 zugeordneten zweiten Netzwerk-Port P2. Infolgedessen wird mittels der ersten IP-Adresse IP1 der Verbindungsaufbau zur Kommunikationseinrichtung KE signalisiert. Dabei erfolgt die Adressierung vom Gatekeeper GK zur Kommunikationseinrichtung KE mithilfe der ersten IP-Adresse IP1. Im Gatekeeper GK oder in einem der im Übertragungspfad befindlichen, nicht dargestellten Netzwerk-Elementen erfolgt eine Umsetzung von der ersten IP-Adresse IP1 zur ihr zugeordneten zweiten MAC-Adresse MAC2 basierend auf der Konfiguration im DHCP-Server DHCP, in dem in der DHCP-Tabelle TAB3 die erste IP-Adresse IP1 der zweiten MAC-Adresse MAC2 zugeordnet ist.

Mit dieser Information erfolgt die Adressierung zum Aufbauen einer Teilverbindung zur Kommunikationseinrichtung KE im Rahmen der Verbindung RUF zumindest von einem der Netwerk-Elemente oder dem Gatekeeper GK über die zweite MAC-Adresse MAC2. Die Teilverbindung wird zum ermittelten zweiten Netzwerk-Port P2 der Kommunikationseinrichtung KE mittels der zweiten MAC-Adresse MAC2 und dem zweiten Netzwerk-Port P2 aufgebaut. Wobei so ein Aufbauen einer Teilverbindung zu einem Netzwerk-Port dabei auch als Übermittlung des Netzwerk-Ports im Rahmen der Teilverbindung gesehen werden kann.

Erfindungsgemäß ermittelt die Kommunikationseinrichtung KE infolge dieser eingehenden Teilverbindung abhängig vom zweiten Netzwerk-Port P2 die erste MAC-Adresse MAC1 der ersten Endeinrichtung EE1 über die Kommunikationseinrichtungstabelle TAB2 und baut die Verbindung RUF durch Adressierung über die erste MAC-Adresse MAC1 auf. Die ersten Endeinrichtung EE1 kann daraufhin diese weitervermittelte Verbindung annehmen und eine Signalisierungsverbindung und/oder eine Nutzdatenkommunikation zwischen dem rufenden Kommunikationspartner und der ersten Endeinrichtung EE1 durchschalten. Der rufende Kommunikationspartner und die ersten Endeinrichtung EE1 können somit Daten austauschen, wobei jegliche Daten zur und/oder von der ersten Endeinrichtung EE1 über die Kommunikationseinrichtung KE entsprechend der vorstehenden Verfahrensschritte weitergeleitet wird.

Für die Nutzdatenkommunikation wird von der Kommunikationseinrichtung KE der Nutzdatenstrom, z.B. ein RTP-Datenstrom in heute üblichen Systemen (RTP: Real Time Protocol), zur ersten Endeinrichtung EE1 durchgeschaltet.

In einer vorteilhaften Weiterbildung kann in der Kommunikationseinrichtungstabelle TAB2 zusätzlich ein Netzwerk-Port zur spezifischeren Adressierung der ersten Endeinrichtung EE1 gespeichert werden. Dies ist insofern vorteilhaft, als dass dadurch verschiedene Dienste der ersten Endeinrichtung EE1, z.B. FTP-Dienst zum Einspielen von Software-Ständen der Endeinrichtung, HTTP-Dienst zur Konfigurierung der Endeinrichtung oder Kommunikationsdienst für die Sprachkommunikation, direkt adressierbar werden.

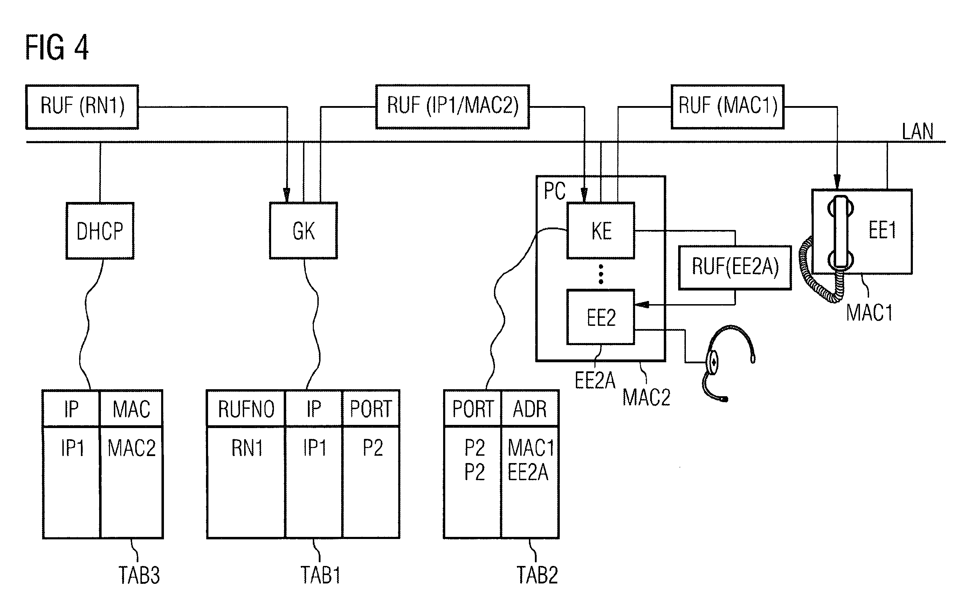

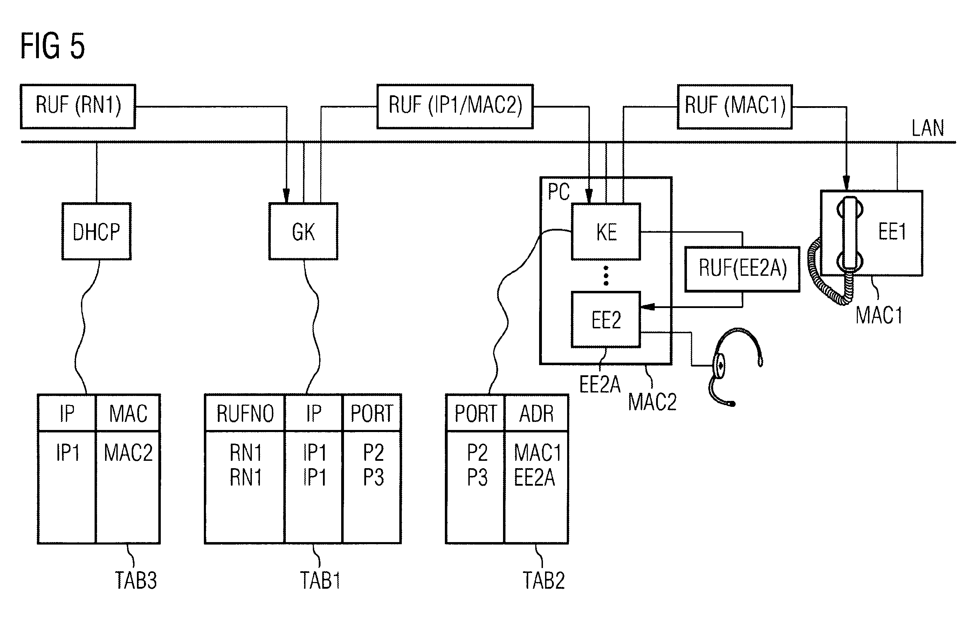

Die Figuren 4 und 5 stellen schematisch die Konfigurationstabellen und den Verbindungsaufbau dar, falls auf dem Rechner PC die zweite Endeinrichtung EE2 eingerichtet und aktiviert ist.

Figur 4 unterscheidet sich von Figur 3 lediglich darin, dass in der Kommunikationsendeinrichtungstabelle TAB2 ein weiterer Eintrag für den Netzwerk-Port P2 vorhanden ist, der auf die Einsprungadresse EE2A der zweiten Endeinrichtung EE2 verweist. Der Verbindungsaufbau erfolgt analog zu Figur 3, wobei zusätzlich die Kommunikationseinrichtung KE bei Empfang der Verbindung RUF vom Gatekeeper GK für jeden Eintrag in der Kommunikationseinrichtungstabellen TAB2 eine Verbindung zur jeweiligen Endeinrichtung initiiert. So kann für die Zuordnung von Netzwerk-Port P2 zur ersten MAC-Adresse MAC1 die Verbindung RUF mittels Adressierung über diese ersten MAC-Adresse MAC1 zur ersten Endeinrichtung EE1 aufgebaut werden. Zusätzlich wird für die Zuordnung von Netzwerk-Port P2 zur Einsprungadresse EE2A die Verbindung RUF mittels rechnerinterner Adressierung zu dieser Einsprungadresse EE2A zur zweiten Endeinrichtung EE2 aufgebaut.

Daraufhin kann einem Anwender der Endeinrichtungen z.B. durch akustische oder optische Signale ein eingehender Ruf mitgeteilt werden. Die Nutzdatenverbindung wird insbesondere dann zur jeweiligen Endeinrichtung durchgeschaltet, je nachdem welches der beiden Endeinrichtungen EE1,EE2 in einem anschließenden, nicht dargestellten Schritt, die Verbindung annimmt.

Bei Verbindungsannahme durch die zweite Endeinrichtung EE2, wird für die Nutzdatenkommunikation zu dieser von der Kommunikationseinrichtung KE der Nutzdatenstrom, z.B. ein RTP-Datenstrom, zur Audio-Einheit, insbesondere einer Soundkarte mit Mikrofon und Kopfhörer, des Rechners PC durchgeschaltet.

Figur 5 veranschaulicht einen entsprechenden Verbindungsaufbau analog zu Figur 4 mit einer zu Figur 4 veränderten Konfiguration in der Gatekeeper-Tabelle TAB1 und der Kommunikationseinrichtungstabelle TAB2. Die Gatekeeper-Tabelle TAB1 enthält einen zweiten Eintrag für die Rufnummer RN1, wobei dieser Rufnummer die erste IP-Adresse IP1 und ein dritter Netwerk-Port P3 zugeordnet werden. Weiterhin wird in der Kommunikationseinrichtungstabelle TAB2 dem dritten Netwerk-Port P3 die Einsprungadresse EE2A zugeordnet. Die Verbindung wird dann analog zu bisher dargestellten Verfahrensschritten zu beiden Endeinrichtungen EE1,EE2 aufgebaut.

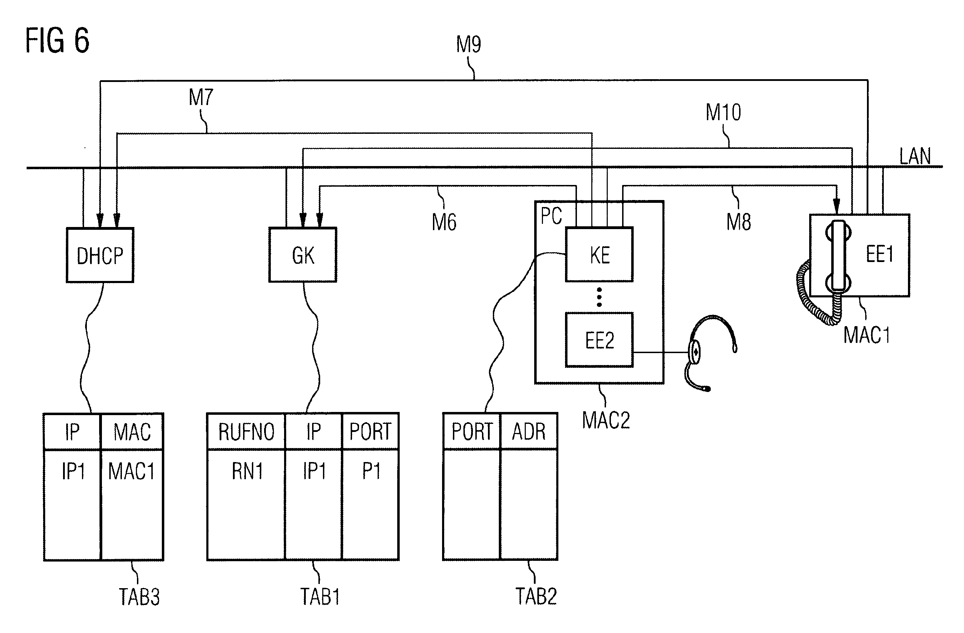

Figur 6 veranschaulicht ausgehend von der Konfiguration dargestellt in Figur 3, ein Deaktivieren des Rechners PC und der Kommunikationseinrichtung KE. In einem ersten Deaktivierungsschritt schickt die Kommunikationseinrichtung KE eine Abmeldemeldung M6 mit vorzugsweise der ersten IP-Adresse IP1 als Parameter an den Gatekeeper GK. Dieser löscht daraufhin den zugehörigen Eintrag in der Gatekeeper-Tabelle TAB1 und gibt somit die in dem Eintrag angegebene Rufnummer RN1 frei. Weiterhin schickt der Rechner PC eine Abmeldemeldung M7 zum DHCP-Server DHCP zum Löschen des Eintrags für die erste IP-Adresse IP1 in der DHCP-Tabelle TAB3 und somit zum Freigeben der ersten IP-Adresse IP1.

Nach Erhalt einer Bestätigung (nicht dargstellt) vom DHCP-Server informiert die Kommunikationseinrichtung KE die erste Endeinrichtung EE1 mittels Meldung M8 über den Vorgang des Deaktivierens des Rechners PC. Alternativ erkennt die erste Endeinrichtung EE1 durch ein Ausbleiben einer wiederholten Polling-Meldung (nicht dargstellt) das Deaktivieren des Rechners PC. Daraufhin meldet sich die erste Endeinrichtung EE1 beim DHCP-Server DHCP an. Schematisch ist dies durch die Anmelde-Meldung M9 dargestellt, wobei diese Anmeldung evtl. den Austausch mehrerer üblicher Meldungen wie "DHCP-Discover" zum DHCP-Server, dessen Antwort mit "DHCP-Offer", darauf die Antwort "DHCP-Request" zum DHCP-Server und dessen Antwort "DHCP-Acknowledge" inklusive der ersten IP-Adresse IP1 als Parameter umfassen kann.

Es sei angenommen, dass der DHCP-Server daraufhin der ersten Endeinrichtung EE1 die erste IP-Adresse IP1 logisch zuweist und somit eine Zuordnung von der ersten IP-Adresse IP1 zur ersten MAC-Adresse MAC1 durchführt. Nach dem Anmelden beim DHCP-Server DHCP meldet sich die ersten Endeinrichtung EE1 beim Gatekeeper GK mittels Anmelde-Meldung M10 an. Übermittelt wird dabei in dieser Anmelde-Meldung M10 vorzugsweise die ersten IP-Adresse IP1 und der erste Netzwerk-Port P1 als Parameter. Daraufhin speichert der Gatekeeper GK eine Zuordnung von der Rufnummer RN1 zur ersten IP-Adresse IP1 und zum ersten Netzwerk-Port P1 in der Gatekeeper-Tabelle TAB1. Der erste Netwerk-Port P1 ist dabei eine, die erste Endeinrichtung EE1 ansteuernde Zusatzinformation, über den die ersten Endeinrichtung EE1 ein- und/oder ausgehende Verbindungen durchführen kann. Dabei muss der Wert des ersten Netzwerk-Ports P1 nicht notwendigerweise gleich sein zu dessen Wert in vorhergehenden Verfahrensschritten.

Nach Deaktivierung des Rechners PC wird also der durch Figur 1 veranschaulichte Systemzustand wieder hergestellt. Lediglich eine einzige IP-Adresse ist im System reserviert und eingehende Verbindungen werden zur ersten Endeinrichtung EE1 unter Umgehung des inaktiven Rechners PC durchgeschaltet. Das erfindungsgemäße Verfahren ist somit kompatibel zum Verbindungsaufbau bestehender Verfahren und ist leicht integrierbar in bestehende Kommunikationssysteme.

In Figur 7 ist eine Kopplung der Kommunikationseinrichtung KE über einen in der ersten Endeinrichtung EE1 enthaltenen IP-Switch S schematisch darstellt. Der Rechner PC ist aktiv und mit diesem IP-Switch S verbunden. Eine direkte Verbindung des Rechners PC zum lokalen Netzwerk LAN existiert nicht oder wird für die Verbindung nicht verwendet. Die Werte in den Konfigurationstabellen entsprechen denen von Figur 3.

Für eine eingehende Verbindung RUF wird wie in Figur 3 im Gatekeeper GK für die Rufnummer RN1 die erste IP-Adresse IP1 und der zweite Netzwerk-Port P2 ermittelt. Eine Adressierung der Verbindung RUF vom Gatekeeper GK zum Rechner PC erfolgt über die erste IP-Adresse IP1 oder über die zugeordnete zweite MAC-Adresse MAC2 des Rechners PC. Die Verbindung RUF wird vom Gatekeeper GK über den IP-Switch S zur Kommunikationseinrichtung KE aufgebaut. Dort wird anhand des zweiten Netzwerk-Ports P2 die erste MAC-Adresse MAC1 der ersten Endeinrichtung EE1 als Ziel der Verbindung RUF ermittelt. Daraufhin baut Kommunikationseinrichtung KE eine Verbindung RUF zum IP-Switch S auf und adressiert die erste Endeinrichtung EE1 mit der ersten MAC-Adresse MAC1. Im IP-Switch S wird die Verbindung RUF daraufhin aufgrund der ersten MAC-Adresse MAC1 zur ersten Endeinrichtung EE1 weitergeleitet.

Die Kopplung der Kommunikationseinrichtung KE über einen Switch S an die erste Endeinrichtung EE1 ist insofern vorteilhaft, als dass der Switch S ein Aktivieren und/oder Deaktivieren Kommunikationseinrichtung KE aufgrund eines sogenannten "link up" und/oder "link down" am Switch-Ausgang zur Kommunikationseinrichtung KE oder zum Rechner PC erkennen kann. Dies sind insbesondere Veränderungen - z.B. Auf- und/oder Abbau - der Transportschicht der Verbindung. Ein Erkennen so eines "link up" und/oder "link down" kann der Switch S der ersten Endeinrichtung EE1 mitteilen, so dass diese von ihr durchzuführende Verfahrensschritte im Rahmen des Aktivierens und/oder Deaktivierens ausgelöst werden können.

Bei den bisher beschriebenen Verfahrensschritten ist insbesondere vorteilhaft, dass in allen Verfahrensschritten nur eine IP-Adresse, die erste IP-Adresse IP1, verwendet wird, während sonst, ohne das erfindungsgemäße Verfahren, üblicherweise zwei IP-Adressen reserviert werden. Weiterhin ist vorteilhaft, dass bei wiederholten Aktivierungen des Rechners PC dem Rechner PC und/oder der ersten Endeinrichtung EE1 vom DHCP-Server DHCP jeweils dieselbe IP-Adresse zugeordnet werden kann. Somit ist es nicht erforderlich statische Konfigurationen in weiteren Netzwerk-Elementen oder Anwendungen neben den in den Verfahrensschritten dargestellten Konfigurationen zu aktualisieren.

In den folgenden Figuren 8-13 werden Verfahrensschritte und Konfigurationen bei Verwendung des "Multiple Line Appearances"-Leistungsmerkmals veranschaulicht.

Figur 8 veranschaulicht hierbei eine Grundkonfiguration des erfindungsgemäßen Verfahrens bei Verwendung des "Multiple Line Appearances"-Leistungsmerkmals, unter der Voraussetzung, dass der Rechner PC deaktiviert ist. Die DHCP-Tabelle TAB3 speichert hierbei die Zuordnung einer dritten IP-Adresse IP3 zur ersten MAC-Adresse MAC1 der ersten Endeinrichtung EE1.

Durch das "Multiple Line Appearances"-Leistungsmerkmal sind in der Gatekeeper-Tabelle TAB1 der Rufnummer RN1 die dritte IP-Adresse IP3 und dem ersten Netzwerk-Port P1 zugeordnet. Weiterhin ist einer dritten Rufnummer RN3 die dritte IP-Adresse IP3 und einem vierten Netzwerk-Port P4 zugeordnet. Der erste und der vierte Netzwerk-Port P1,P4 sind dabei gültige Ports, an denen die Endeinrichtung EE1 Verbindungen annehmen kann. Werte dieser Netzwerk-Ports P1,P4 können dabei identisch sein. Weiterhin speichert der Gatekeeper GK in einer Multiline-Tabelle TAB4 eine Zuordnung von der Rufnummer RN1 zu einer zweiten Rufnummer RN2 und zu der dritten Rufnummer RN3. Diese Zuordnung bewirkt, dass eingehende Verbindungen zur zweiten oder zur dritten Rufnummer RN2,RN3 so behandelt werden, als ob sie zur Rufnummer RN1 adressiert worden wären. So kann gemäß des "Multiple Line Appearances"-Leistungsmerkmal eine an die zweite Rufnummer RN2 adressierte Verbindung an die Endeinrichtung, der die Rufnummer RN1 zugeordnet ist, vermittelt werden.

Ein erfindungsgemäßer Verbindungsaufbau in einem System mit oben genannter Konfiguration würde bei Adressierung mit der Rufnummer RN1 oder der dritten Rufnummer RN3 zur ersten Endeinrichtung EE1 durchgeschaltet werden, da beiden Rufnummern im Gatekeeper GK die dritte IP-Adresse IP3 zugeordnet ist und der dritten IP-Adresse IP3 im DHCP-Server DHCP die erste MAC-Adresse MAC1 der ersten Endeinrichtung EE1 zugeordnet ist.

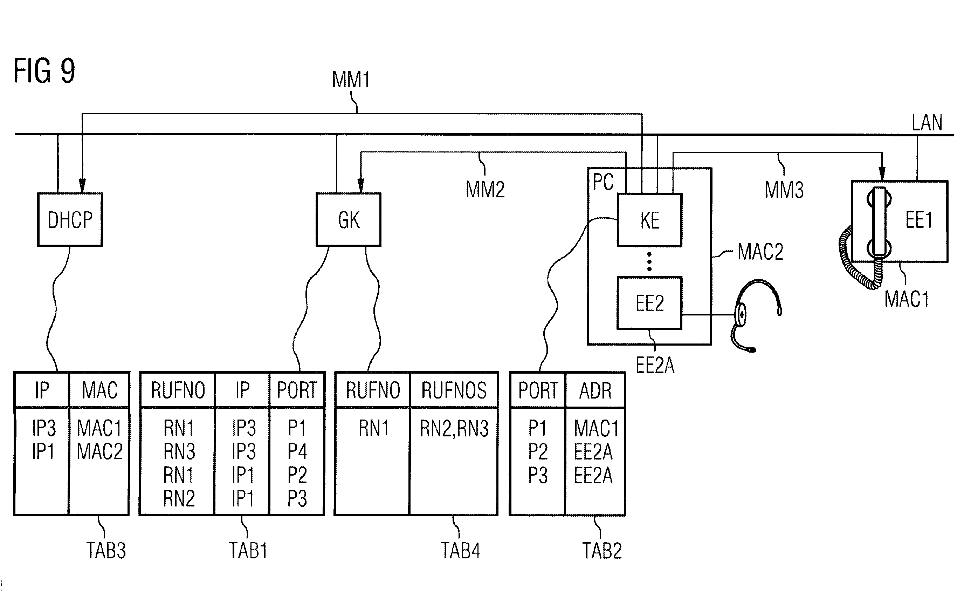

Ausgehend von dieser Konfiguration veranschaulicht Figur 9 schematisch, welche Meldungen beim Aktivieren des Rechners PC und somit der Kommunikationseinrichtung KE ausgetauscht werden und welche Einträge sich daraus in den Konfigurationstabellen TAB1,TAB2,TAB3,TAB4 resultieren.

Sobald das Aktivieren des Rechner PC initiiert wird, meldet sich dieser mittels der Anmelde-Meldung MM1 beim DHCP-Server DHCP an. Der DHCP-Server DHCP reserviert die erste IP-Adresse IP1, weist ihr die zweite MAC-Adresse MAC2 des Rechners PC zu und speichert diese Zuordnung in der DHCP-Tabelle TAB3. Somit werden temporär zwei IP-Adressen im Kommunikationssystem für den Rechner PC und die erste Endeinrichtung EE1 reserviert.

Nach Antwort vom DHCP-Server DHCP registriert sich die Kommunikationseinrichtung KE durch die Anmelde-Meldung MM2 beim Gatekeeper GK. Dieser erzeugt eine Zuordnung der Rufnummer RN1 zur ersten IP-Adresse IP1 und dem zweiten Netzwerk-Port P2 sowie eine Zuordnung der zweiten Rufnummer RN2 zur ersten IP-Adresse IP1 und einem dritten Netzwerk-Port P3. Diese Zuordnung wird in der Gatekeeper-Tabelle TAB3 gespeichert. Darüberhinaus ordnet die Kommunikationseinrichtung KE die erste MAC-Adresse MAC1 dem ersten Netzwerk-Port P1, die Einsprungadresse EE2A dem zweiten Netzwerk-Port P2 und die Einsprungadresse EE2A dem dritten Netzwerk-Port P3 zu und speichert diese Zuordnung in der Kommunikationseinrichtungstabelle TAB2. Weiterhin informiert die Kommunikationseinrichtung KE die erste Endeinrichtung EE1 mittels einer Meldung MM3, dass der Rechner PC aktiviert wurde.

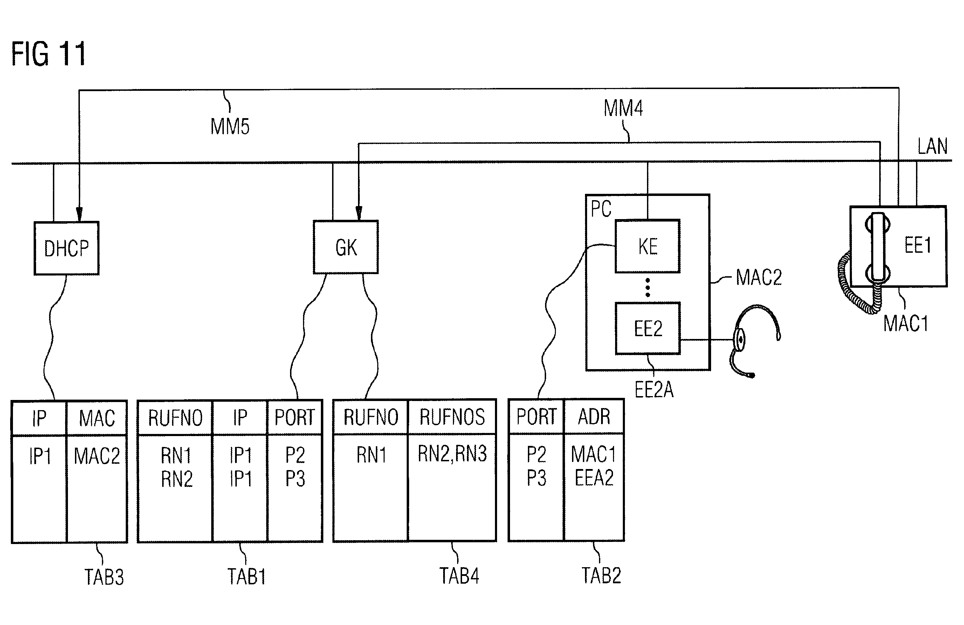

Damit sind die Schritte des Aktivierens des Rechners PC noch nicht vollständig abgeschlossen. Weitere Verfahrensschritte werden weiter unten anhand Figur 11 erläutert.

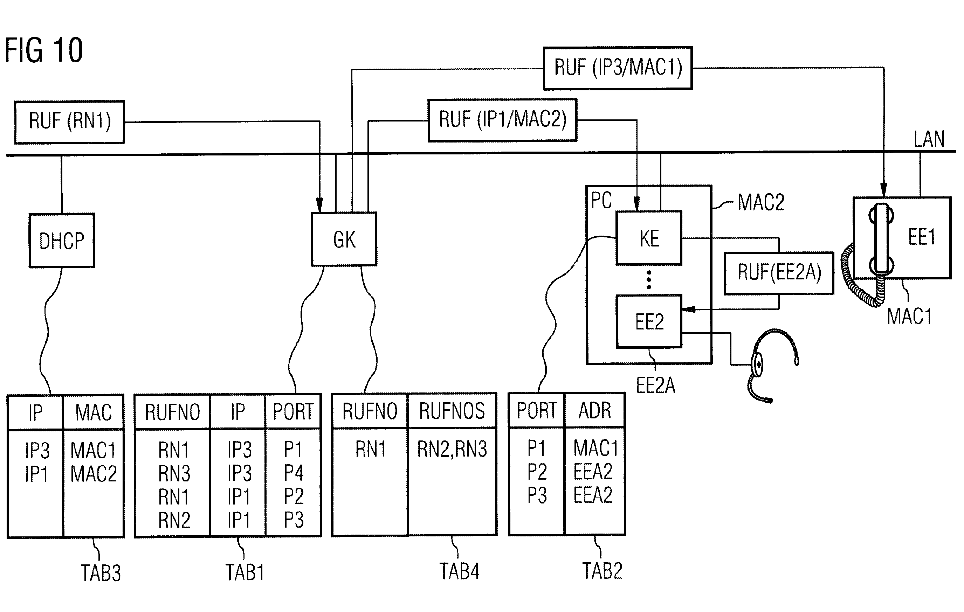

Es ist insbesondere vorteilhaft, dass zu jedem Zeitpunkt des Verfahrensablaufs der Verbindungsaufbau zumindest zu einer der beiden Endeinrichtungen EE1,EE2 möglich ist. Dies wird durch Figur 10 verdeutlicht.

In Figur 10 wird der Verbindungsaufbau nach Versenden der Meldung MM3 veranschaulicht. Weitere Schritte im Rahmen des Aktivierens des Rechners PC werden dann in Figur 11 dargestellt.

Die eingehende Verbindung RUF wird in Figur 10 mit der Rufnummer RN1 adressiert und wird zum Gatekeeper GK geleitet. Dort ermittelt der Gatekeeper GK aufgrund der zwei Einträge für die Rufnummer RN1 in der Gatekeeper-Tabelle TAB1 die dritte IP-Adresse IP3 mit dem Netzwerk-Port P1 sowie die erste IP-Adresse IP1 mit dem zweiten Hardware-Port P2 als Ziel-Sockets für die Verbindung RUF. Der Gatekeeper GK baut jeweils die Verbindung RUF zu den genannten IP-Adressen-Netzwerk-Port Paaren mittels Adressierung über die IP-Adressen IP1,IP3 auf. Dabei wird mit der dritten IP-Adresse IP3 oder der zugeordneten ersten MAC-Adresse MAC1 die Verbindung RUF zur ersten Endeinrichtung EE1 aufgebaut. Weiterhin wird mit der ersten IP-Adresse IP1 oder der zugeordneten zweiten MAC-Adresse MAC2 die Verbindung RUF zur Kommunikationseinrichtung KE und von dort mittels Auswertung der Kommunikationseinrichtungstabelle TAB2 zur zweiten Endeinrichtung EE2 aufgebaut.

In Figur 11 wird im Folgenden das Aktivieren des Rechners PC und der Kommunikationseinrichtung KE fortgesetzt und eine der zugewiesenen IP-Adressen IP1,IP3 freigegeben, so dass der Rechner PC und die ersten Endeinrichtung EE1 nur eine gemeinsame IP-Adresse im System verwenden. Hierbei schickt die erste Endeinrichtung EE1 nach Erhalt der Meldung MM3 die Meldung MM4 zum Deregistrieren der dritten IP-Adresse IP3 an den Gatekeeper GK. Dieser löscht in der Gatekeeper-Tabelle TAB1 alle Einträge für die dritte IP-Adresse IP3, insbesondere die Zuordnung der dritten Rufnummer RN3 zur dritten IP-Adresse IP3 und zum vierten Netzwerk-Port P4. Weiterhin übermittelt die erste Endeinrichtung EE1 die Meldung MM5 zum Freigeben der dritten IP-Adresse IP3 an den DHCP-Server DHCP. Dieser löscht in der der DHCP-Tabelle TAB3 den Eintrag für die dritte IP-Adresse IP3. Somit ist die Zuordnung der dritten IP-Adresse IP3 zur ersten MAC-Adresse MAC1 aufgehoben.

Die Kommunikationseinrichtung KE aktualisiert daraufhin die Kommunikationseinrichtungstabelle TAB2, indem dem Netzwerk-Port P2 die erste MAC-Adresse MAC1 zugeordnet wird. Der Eintrag für den ersten Netzwerk-Port P1 wird gelöscht. Somit werden Verbindungen daraufhin über die Kommunikationseinrichtung KE an die erste sowie die zweiten Endeinrichtung EE1,EE2 unter Verwendung lediglich einer gemeinsamen IP-Adresse - im vorliegenden Ausführungsbeispiel die erste IP-Adresse IP1 - übermittelt.

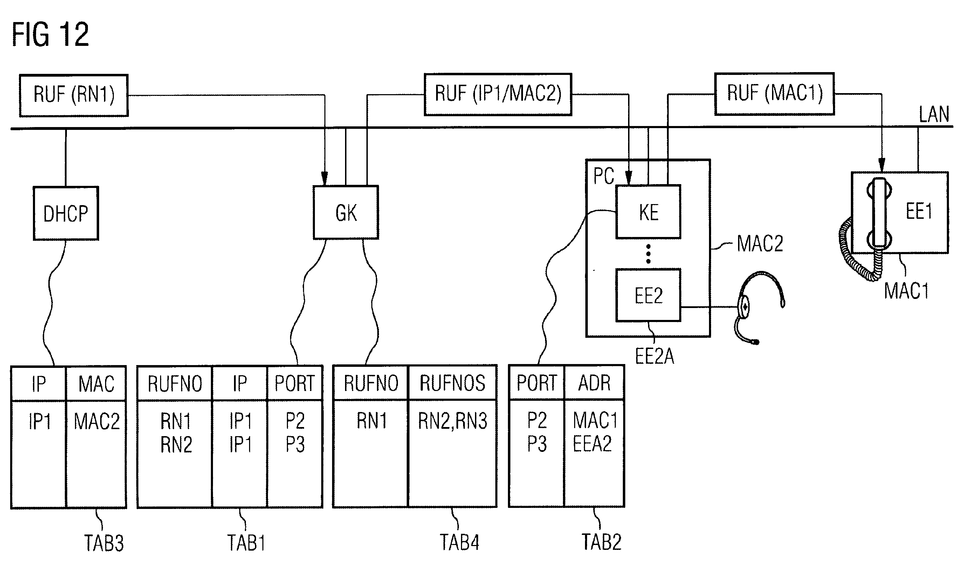

Ein solcher Verbindungsaufbau ist in Figur 12 veranschaulicht. Die über die Rufnummer RN1 adressierte Verbindung RUF wird zum Gatekeeper GK vermittelt. Dieser ermittelt aus der Gatekeeper-Tabelle TAB1 die Zuordnung von der Rufnummer RN1 zur ersten IP-Adresse IP1 und zum zweiten Netzwerk-Port P2 und baut über diese oder der, der ersten IP-Adresse IP1 zugeordneten, zweiten MAC-Adresse MAC2 die Verbindung RUF zur Kommunikationseinrichtung KE auf. Dort wird anhand des übermittelten zweiten Netzwerk-Ports P2 die erste MAC-Adresse MAC1 ermittelt. Zu dieser wird von der Kommunikationseinrichtung KE die Verbindung RUF aufgebaut. Somit ist die Verbindung RUF zur ersten Endeinrichtung EE1 aufgebaut.

Alternativ oder zusätzlich kann die Verbindung RUF zur zweiten Endeinrichtung EE2 vermittelt werden.

Alternativ kann ein Adressieren der eingehenden Verbindung RUF mittels der zweiten Rufnummer RN2 oder der dritten Rufnummer RN3 erfolgen. Dies kann analog durch Auswertung der in den Figuren dargestellten Konfigurationstabellen durchgeführt werden.

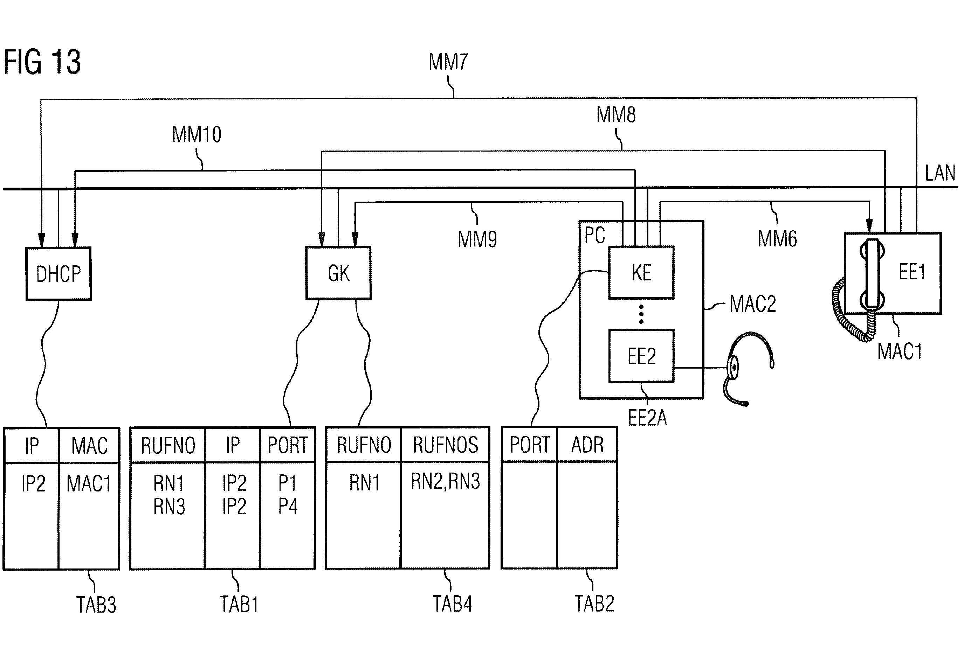

Ein Deaktivieren des Rechners PC ausgehend der Konfiguration von Figur 11 ist in Figur 13 veranschaulicht. Der Rechner PC schickt dazu die Meldung MM6 zur ersten Endeinrichtung EE1, um ihn über das nun folgende Deaktivieren zu informieren. Diese schickt eine Anmelde-Meldung MM7 an den DHCP-Server DHCP, so dass zeitweise zwei Einträge in der DHCP-Tabelle TAB3 gespeichert sind. Dies sind in diesem Verfahrensschritt die erste IP-Adresse IP1, die der zweiten MAC-Adresse MAC2 zugeordnet wird und die zweite IP-Adresse IP2, die der ersten MAC-Adresse MAC1 zugeordnet wird. Anschließend schickt die erste Endeinrichtung EE1 eine Anmelde-Meldung MM8 an den Gatekeeper GK, damit dieser die zweite IP-Adresse IP2 der Rufnummer RN1 und der dritten Rufnummer RN3 zusammen mit eindeutigen, für die erste Endeinrichtung EE1 gültigen und diese ansteuernden Hardware-Ports P1 oder P4 zuordnet. Somit sind dort vorübergehend vier Einträge vorhanden: die Zuordnung der Rufnummer RN1 zur ersten IP-Adresse IP1 und zum zweiten Hardware-Port P2, die Zuordnung der zweiten Rufnummer RN2 zur ersten IP-Adresse IP1 und zum dritten Hardware-Port P3, die Zuordnung der Rufnummer RN1 zur zweiten IP-Adresse IP2 und zum ersten Hardware-Port P1, sowie die Zuordnung der dritten Rufnummer RN3 zur zweiten IP-Adresse IP2 und zum vierten Hardware-Port P4. Die Tabelleninhalte dieses Zwischenschritts sind in der Figur 13 nicht dargestellt.

Die Kommunikationseinrichtung KE schickt im Folgenden im Rahmen des Deaktivierens eine Meldung MM9 zum Gatekeeper GK, um die Einträge für erste IP-Adresse IP1 zu löschen und somit u.a. die Zuordnung der zweiten Rufnummer RN2 zur ersten IP-Adresse IP1 aufzuheben. Die Kommunikationseinrichtungstabelle TAB1 enthält somit nur noch zwei Einträge für die Rufnummer RN1 und die dritte Rufnummer RN3. Anschließend schickt der Rechner PC eine Meldung MM10 zum Freigeben der ab diesen Zeitpunkt nicht mehr benötigten ersten IP-Adresse IP1 an den DHCP-Server DHCP. Somit verbleibt lediglich die Zuordnung der zweiten IP-Adresse IP2 zur ersten MAC-Adresse MAC1 in der DHCP-Tabelle TAB3. Es wird damit ein Systemzustand eingenommen, der dem durch Figur 8 veranschaulichten Systemzustand entspricht.

Vorteilhaft beim Deaktivieren des Rechners ist ebenfalls, dass zu jedem Verfahrensschritt die erste Endeinrichtung EE1 oder beide Endeinrichtungen EE1,EE2 erreichbar bleibt. Die kurzfristige Verwendung von zwei IP-Adressen wird nach wenigen Verfahrensschritten wieder beendet, so dass nach Abschluss des Deaktivierens wiederum nur eine einzige IP-Adresse reserviert wird.

Weiterhin ist an den in den Figuren 8-13 veranschaulichten Verfahrensschritten vorteilhaft, dass selbst bei gleichzeitigem Aktivieren von mehreren Endeinrichtungen und Rechnern zu keiner oder geringer Verzögerung des Ablaufs der Verfahrensschritte kommt.

Vorzugsweise wird das Kommunikationssystem und/oder der DHCP-Server DHCP so konfiguriert, dass bei Verwendung des "Multiple Line Appearances"-Leistungsmerkmals ein Pool von temporären IP-Adressen reserviert wird, die dann während des Aktivierens und/oder Deaktivierens der Kommunikationseinrichtung KE zur Verfügung stehen und von gleichzeitig ablaufenden erfindungsgemäßen Verfahren für mehrere Endeinrichtungen und/oder Kommunikationseinrichtungen gemeinsam verwendet werden können.

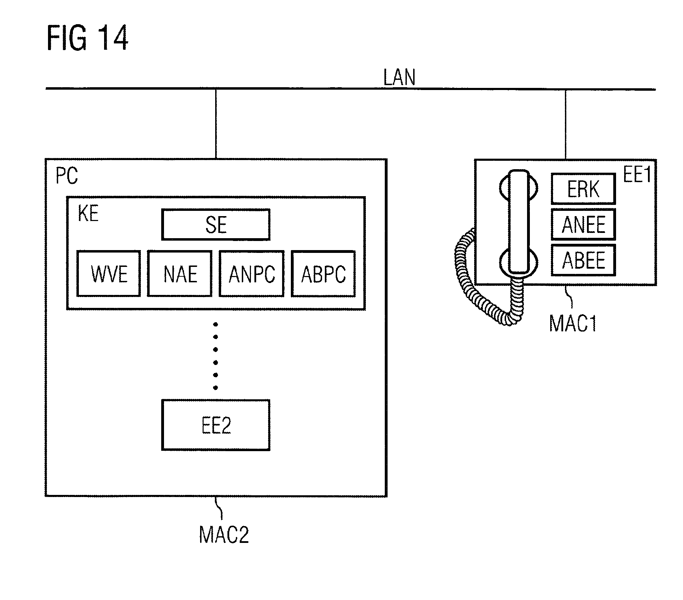

Figur 14 stellt schematisch die erfindungsgemäße Kommunikationseinrichtung KE und die erfindungsgemäße erste Endeinrichtung EE1 dar, die die in den vorangegangenen Figuren dargestellten Verfahrensschritte ausführen. Figur 14 umfasst dabei einen Ausschnitt des in den Figuren 1-6 und 8-13 dargestellten Kommunikationssytems.

Die Kommunikationseinrichtung KE ist Teil des Rechners PC und umfasst eine Servereinrichtung SE zum Aufrufen einer einem Netzwerk-Port zugeordneten Weitervermittlungseinheit WVE infolge einer eingehenden, über eine Rufnummer adressierten Teilverbindung und abhängig von dem übermittelten Netzwerk-Port. Diese Servereinrichtung SE kann insbesondere eine Betriebssystem-Funktion des Rechners PC sein, durch die eingehende Verbindungen aufgrund des angesprochenen Netzwerk-Ports an diesen Netzwerk-Ports zugeordnete, verschiedene Software-Komponenten des PCs, z.B. FTP-Client, Mail-Browser, SMTP-Client, Datenbank-Treiber oder die Weitervermittlungseinheit WVE übergeben werden. Einem Netzwerk-Port ist eine oder mehrere Weitervermittlungseinheiten WVE zugeordnet, wobei mehrere Netzwerk-Ports einer gemeinsamen Weitervermittlungseinheit WVE oder jeweils einer spezifischen von mehreren Weitervermittlungseinheiten WVE zugeordnet sein können.

Im vorliegenden Ausführungsbeispiel gebe es genau eine Weitervermittlungseinheit WVE, die insbesondere die Aufgabe erfüllt, eine bei der Kommunikationseinrichtung KE eingehende Teilverbindung an die erste Endeinrichtung EE1 weiterzuvermitteln. Dabei ermittelt die Weitervermittlungseinheit WVE bei einer eingehenden Verbindung zur ersten Endeinrichtung EE1 die erste MAC-Adresse MAC1, z.B. aufgrund einer vorangegangenen Konfiguration der Kommunikationseinrichtung KE.

Nach Ermittlung der ersten MAC-Adresse MAC1, adressiert die Weitervermittlungseinheit WVE die ersten Endeinrichtung EE1 anhand dieser ersten MAC-Adresse MAC1 und vermittelt die Teilverbindung weiter zur ersten Endeinrichtung EE1. Jeder daraufhin folgende Datenverkehr im Rahmen einer Signalisierungsverbindung und/oder einer Nutzdatenverbindung zur ersten Endeinrichtung EE1 wird über die Weitervermittlungseinheit WVE an die erste Endeinrichtung EE1 weitergeleitet.

Darüberhinaus umfasst die Kommunikationseinrichtung KE weitere Komponenten, die im Rahmen eines Aktivierens und/oder Deaktivierens der Kommunikationseinrichtung KE aufgerufen werden. Dies ist zum einen eine Netzwerk-Adressen-Ermittlungseinheit NAE zum Zuordnen einer der Kommunikationseinrichtung KE oder dem Rechner PC zugeordneten, festen, zweiten MAC-Adresse MAC2 zu einer IP-Adresse und/oder zum Abfragen der IP-Adresse. Dabei werden insbesondere Meldungen an einen im Netzwerk befindlichen DHCP-Server geschickt und von diesem empfangen.

Weiterhin umfasst die Kommunikationseinrichtung KE eine Anmelde- und eine Abmeldeeinheit bei einem Gatekeeper zum Zuordnen oder zum Aufheben der Zuordnung von der Rufnummer zu der IP-Adresse und dem Netzwerk-Port. Dabei wird im Rahmen eines Aktivierens der Kommunikationseinrichtung KE die Anmeldeeinheit aufgerufen, die eine Registrierungsmeldung an den Gatekeeper sendet, um der Rufnummer die IP-Adresse des Rechners PC zuzuordnen und um den für die Weitervermittlung von Verbindungen gültigen Netzwerk-Port des Rechners PC anzugeben.

Im Rahmen eines Deaktivierens der Kommunikationseinrichtung KE wird die Abmeldeeinheit aufgerufen, die eine Deregistrierungsmeldung an den Gatekeeper sendet, um die Zuordnung Rufnummer zu der IP-Adresse des Rechners PC und/oder dem Netzwerk-Port aufzuheben.

Die in Figur 14 schematisch dargestellte, erfindungsgemäße erste Endeinrichtung EE1 mit der ersten MAC-Adresse MAC1 ist direkt oder über einen Switch (nicht dargestellt) an ein paketorientiertes Netzwerk LAN angekoppelt. Ist die Kommunikationseinrichtung KE nicht aktiv oder nicht im Kommunikationssystem vorhanden, dann ist der ersten Endeinrichtung EE1 die IP-Adresse zugeordnet. Weiterhin ist ihr die Rufnummer zugeordnet, über die sie logisch adressiert werden kann. Eingehende Verbindungen an die erste MAC-Adresse MAC1 können je nach adressiertem Netwerk-Port entweder zu einer internen Anwendung wie einem FTP-Client zur Aktualisierung eines Software-Standes, eine HTTP-Client zur Konfiguration der ersten Endeinrichtung EE1 oder zu einer die Verbindung annehmende Komponente weitergeleitet werden.

Weiterhin umfasst die erste Endeinrichtung EE1 Komponenten, die ein Aktivieren und/oder Deaktivieren der der ersten Endeinrichtung EE1 zugehörigen Kommunikationseinrichtung KE erkennen und Schritte im Rahmen des genannten Verfahrens durchführen. Eine Erkennungseinheit ERK der ersten Endeinrichtung EE1 erkennt das Aktivieren und/oder das Deaktivieren der Kommunikationseinrichtung KE. Dies geschieht insbesondere durch den Empfang und Verarbeitung einer eingehenden Meldung von der Kommunikationseinrichtung KE oder durch regelmäßiges Versenden einer Polling-Meldung an die Kommunikationseinrichtung KE, wobei das Deaktivieren der Kommunikationseinrichtung KE durch ein Ausbleiben einer zugehörigen Bestätigungsantwort erkannt wird. Das Aktivieren der Kommunikationseinrichtung KE wird durch einen erstmaligen Erhalt von zugehörigen Bestätigungsantworten erkannt. Insbesondere bei direkter physikalischer Kopplung der ersten Endeinrichtung EE1 zur Kommunikationseinrichtung KE über lediglich passive Netzelemente, kann ein Aktivieren und/oder Deaktivieren anhand eines Empfangs oder Ausbleibens von Daten-Transportmeldungen von der Kommunikationseinrichtung KE erkannt werden. Vorzugsweise kann ein "link up" oder ein "link down" der Kommunikationseinrichtung erkannt werden, z.B. an einem Eingang eines, in der ersten Endeinrichtung EE1 enthaltenen Switches.

Weiterhin umfasst die erste Endeinrichtung EE1 eine Anmeldeeinheit zum Registrieren der ersten Endeinrichtung EE1 beim Gatekeeper abhängig vom Erkennen des Deaktivierens der Kommunikationseinrichtung KE. Im Rahmen des Registrierens wird eine Registrierungsmeldung an den Gatekeeper übermittelt, wobei die IP-Adresse der Netzwerk-Port der die Verbindung annehmende Komponente der ersten Endeinrichtung EE1 als Parameter mitgeschickt wird.

Darüberhinaus umfasst die erste Endeinrichtung EE1 eine Abmeldeeinheit zum Deregistrieren der ersten Endeinrichtung EE1 beim Gatekeeper abhängig vom Erkennen des Aktivierens der Kommunikationseinrichtung KE. Im Rahmen des Deregistrierens wird eine Deregistrierungsmeldung an den Gatekeeper übermittelt, wobei zumindest die IP-Adresse mitgeschickt werden.

## Patentansprüche

1. Verfahren zum Aufbauen einer Verbindung zu einer Endeinrichtung (EE1,EE2), die über ein paketorientiertes Netzwerk (LAN) mit einer Kommunikationseinrichtung (KE) und einer Verbindungssteuerung (GK) gekoppelt ist, wobei
a) der Endeinrichtung (EE1) eine Rufnummer (RN1) zugeordnet ist, über die sie für eine Verbindung logisch adressierbar ist,
b) der Endeinrichtung (EE1) eine erste Hardware-Adresse (MAC1) zugeordnet ist, über die sie im Netzwerk (LAN) adressierbar ist,
c) der Kommunikationseinrichtung (KE) eine zweite Hardware-Adresse (MAC2) zugeordnet ist, über die sie im Netzwerk (LAN) adressierbar ist,
d) der zweiten Hardware-Adresse (MAC2) eine erste Netzwerk-Adresse (IP1) zugeordnet wird,
e) der Rufnummer (RN1) die erste Netzwerk-Adresse (IP1) sowie eine Zusatzinformation (P2) durch die Verbindungssteuerung (GK) zugeordnet werden,
f) der Zusatzinformation (P2) die erste Hardware-Adresse (MAC1) durch die Kommunikationseinrichtung (KE) zugeordnet wird, und
g) die über die Rufnummer (RN1) adressierte Verbindung zur Endeinrichtung (EE1) aufgebaut wird, indem
- durch die Verbindungssteuerung (GK) die der Rufnummer (RN1) zugeordnete, erste Netzwerk-Adresse (IP1) und die der Rufnummer (RN1) zugeordnete Zusatzinformation (P2) ermittelt werden,
- die der ermittelten, ersten Netzwerk-Adresse (IP1) zugeordnete, zweite Hardware-Adresse (MAC2) ermittelt wird,
- anhand dieser eine Teilverbindung (RUF) zur durch die ermittelte zweite Hardware-Adresse (MAC2) adressierten, Kommunikationseinrichtung (KE) aufgebaut wird, wobei im Rahmen der Teilverbindung (RUF) die ermittelte Zusatzinformation (P2) zur Kommunikationseinrichtung (KE) übermittelt wird, und
- infolge dieser Teilverbindung (RUF) und abhängig von der übermittelten Zusatzinformation (P2) die diesem zugeordnete, erste Hardware-Adresse (MAC1) ermittelt wird und mit dieser die Teilverbindung (RUF) durch die Kommunikationseinrichtung (KE) zur Endeinrichtung (EE1) weitervermittelt wird.

2. Verfahren nach Anspruch 1,
**dadurch gekennzeichnet,**
**dass** die Kommunikationseinrichtung (KE) und die Endeinrichtung (EE1) im selben Kommunikationsgerät (PC) enthalten sind, die erste und die zweite Hardware-Adresse (MAC1,MAC2) gleich sind, und dass das Weitervermitteln der Verbindung (RUF) zur Endeinrichtung (EE1) durch die Kommunikationseinrichtung (KE) mittels einer geräteinternen Meldung erfolgt.

3. Verfahren nach einem der vorhergehenden Ansprüche,
**dadurch gekennzeichnet,**
**dass** bei einem Deaktivieren der Kommunikationseinrichtung (KE)
- die erste Netzwerk-Adresse (IP1) der ersten Hardware-Adresse (MAC1) zugeordnet wird, und
- der Rufnummer (RN1) die erste Netzwerk-Adresse (IP1) sowie eine die Endeinrichtung (EE1) ansteuernde Zusatzinformation (P1) durch die Verbindungssteuerung (GK) zugeordnet werden.

4. Verfahren nach einem der vorhergehenden Ansprüche,
**dadurch gekennzeichnet,**
**dass** die Kommunikationseinrichtung (KE) und die Endeinrichtung (EE1) so gekoppelt sind, dass ein Aktivieren und/oder ein Deaktivieren der Kommunikationseinrichtung (KE) von der Endeinrichtung (EE1) erkannt wird.

5. Verfahren nach einem der vorhergehenden Ansprüche,
**dadurch gekennzeichnet,**
**dass**
a) beim Deaktivieren der Kommunikationseinrichtung (KE) an die Verbindungssteuerung (GK)
- eine Meldung (M6) zum Freigeben der Rufnummer (RN1) übermittelt wird, und
- eine Meldung (M10) zum Zuordnen der Rufnummer (RN1) zur ersten Netzwerk-Adresse (IP1) und zu einer die Endeinrichtung (EE1) ansteuernde Zusatzinformation (P1) übermittelt wird,
und/oder
b) beim Aktivieren der Kommunikationseinrichtung (KE) an die Verbindungssteuerung (GK)
- eine Meldung (M2) zum Freigeben der Rufnummer (RN1) übermittelt wird, und
- eine Meldung (M5) zum Zuordnen der Rufnummer (RN1) zur ersten Netzwerk-Adresse (IP1) und zu einer die Kommunikationseinrichtung (KE) ansteuernde Zusatzinformation (P2) übermittelt wird.

6. Verfahren nach einem der vorhergehenden Ansprüche,
**dadurch gekennzeichnet,**
**dass**
a) beim Deaktivieren der Kommunikationseinrichtung (KE)
- die erste Netzwerk-Adresse (IP1) der ersten Hardware-Adresse (MAC1) zugeordnet wird, und
- durch die Verbindungssteuerung (GK) die Rufnummer (RN1) zur ersten Netzwerk-Adresse (IP1) und zu einer die Endeinrichtung (EE1) ansteuernde Zusatzinformation (P1) zugeordnet wird,
und/oder
b) beim Aktivieren der Kommunikationseinrichtung (KE)
- die erste Netzwerk-Adresse (IP1) der zweiten Hardware-Adresse (MAC2) zugeordnet wird, und
- durch die Verbindungssteuerung (GK) die Rufnummer (RN1) zur ersten Netzwerk-Adresse (IP1) und zu einer die Kommunikationseinrichtung (KE) ansteuernde Zusatzinformation (P2) zugeordnet wird.

7. Verfahren nach einem der vorhergehenden Ansprüche,
**dadurch gekennzeichnet,**
**dass** ein Adress-Server (DHCP) zum Verwalten und Vergeben von Netzwerk-Adressen (IP1,IP2,IP3) vorgesehen ist, wobei
a) beim Deaktivieren der Kommunikationseinrichtung (KE) an den Adress-Server (DHCP)
- von der Kommunikationseinrichtung (KE)eine Meldung (M7) zum Freigeben der ersten Netzwerk-Adresse (IP1) übermittelt wird, und
- eine Meldung (M9) zum Zuordnen der ersten Netzwerk-Adresse (IP1) zur ersten Hardware-Adresse (MAC1) übermittelt wird,
und/oder
b) beim Aktivieren der Kommunikationseinrichtung (KE) an den Adress-Server (DHCP)
- von der Endeinrichtung (EE1) eine Meldung (M3) zum Freigeben der ersten Netzwerk-Adresse (IP1) übermittelt wird, und
- eine Meldung (M4) zum Zuordnen der ersten Netzwerk-Adresse (IP1) zur zweiten Hardware-Adresse (MAC2) übermittelt wird.

8. Verfahren nach einem der vorhergehenden Ansprüche,
**dadurch gekennzeichnet,**
**dass** eine zweite Endeinrichtung eine Endeinrichtung gemäß Anspruch 1 ist, wobei
- die zweite Endeinrichtung (EE2) eine dritte Hardware-Adresse (EEA2) anstatt der ersten Hardware-Adresse aufweist,
- der Rufnummer (RN1) zusätzlich die erste Netzwerk-Adresse (IP1) und eine zweite Zusatzinformation anstatt der Zusatzinformation gemäß Anspruch 1 zugeordnet wird, und
- eine über die Rufnummer (RN1) adressierte Verbindung zusätzlich zu der zweiten Endeinrichtung (EE2) aufgebaut wird.

9. Verfahren nach Anspruch 8,
**dadurch gekennzeichnet,**
**dass** bei einer von der Endeinrichtung (EE1) und/oder der zweiten Endeinrichtung (EE2) ausgehenden Verbindung die Rufnummer (RN1) als ausgehende Rufnummer signalisiert wird.

10. Verfahren nach einem der Ansprüche 8 oder 9,
**dadurch gekennzeichnet,**
**dass**
a) zum Aufbauen einer zweiten Verbindung zur zweiten Endeinrichtung
- einer zweiten Rufnummer (RN2) die erste Netzwerk-Adresse (IP1) sowie eine dritte Zusatzinformation (P3) durch die Verbindungssteuerung (GK) zugeordnet werden,
- der dritten Zusatzinformation (P3) die dritte Hardware-Adresse (EEA2) durch die Kommunikationseinrichtung (KE) zugeordnet wird, und
- die zweite, über die zweite Rufnummer (RN2) adressierte Verbindung gemäß den Verfahrensschritten von Anspruch 1 zu der zweiten Endeinrichtung (EE2) aufgebaut wird, indem anhand der im Rahmen eines Aufbaus der Verbindung übermittelten dritten Zusatzinformation (P3), dem die dritte Hardware-Adresse (EEA2) der zweiten Endeinrichtung (EE2) zugeordnet ist, die dritte Hardware-Adresse (EEA2) ermittelt wird und mit dieser die Teilverbindung (RUF) durch die Kommunikationseinrichtung (KE) zur zweiten Endeinrichtung (EE2) weitervermittelt wird,
und/oder
b) zum Aufbauen einer dritten Verbindung zur Endeinrichtung (EE1)
- einer dritten Rufnummer (RN3) die erste Netzwerk-Adresse sowie eine vierte Zusatzinformation durch die Verbindungssteuerung (GK) zugeordnet werden,
- der vierten Zusatzinformation die erste Hardware-Adresse (MAC1) durch die Kommunikationseinrichtung (KE) zugeordnet wird, und
- die dritte, über die dritte Rufnummer (RN3) adressierte Verbindung gemäß den Verfahrensschritten von Anspruch 1 zur Endeinrichtung (EE1) aufgebaut wird, indem anhand der im Rahmen eines Aufbaus der Verbindung (RUF) übermittelten vierten Zusatzinformation, dem die erste Hardware-Adresse (MAC1) der Endeinrichtung (EE1) zugeordnet ist, die erste Hardware-Adresse (MAC1) ermittelt wird und mit dieser die Teilverbindung (RUF) durch die Kommunikationseinrichtung (KE) zur Endeinrichtung (EE1) weitervermittelt wird.

11. Verfahren nach Anspruch 10,
**dadurch gekennzeichnet,**
**dass** beim Deaktivieren der Kommunikationseinrichtung (KE)
- der ersten Hardware-Adresse (MAC1) eine zweite Netzwerk-Adresse (IP2) zugeordnet wird, und
- der dritten Rufnummer (RN3) die zweite Netzwerk-Adresse (IP2) sowie eine vierte die Endeinrichtung (EE1) ansteuernde Zusatzinformation (P4) durch die Verbindungssteuerung (GK) zugeordnet werden,
und/oder
- durch die Verbindungssteuerung (GK) die Zuordnung der zweiten Rufnummer (RN2) zur Netzwerk-Adresse (IP1) und der dritten Zusatzinformation (P3) aufgehoben wird,
und/oder
- die Zuordnung der Netzwerk-Adresse (IP1) zur zweiten Hardware-Adresse (MAC2) aufgehoben wird.

12. Verfahren nach einem der Ansprüche 10 oder 11,
**dadurch gekennzeichnet,**
**dass** bei einem Aktivieren der Kommunikationseinrichtung (KE)
- der zweiten Hardware-Adresse (MAC2) eine dritte Netzwerk-Adresse zugeordnet wird,
- der zweiten Rufnummer (RN2) die dritte Netzwerk-Adresse sowie eine dritte Zusatzinformation (P3) durch die Verbindungssteuerung (GK) zugeordnet werden, und
- der dritten Zusatzinformation (P3) die dritte Hardware-Adresse (EE2A) durch die Kommunikationseinrichtung (KE) zugeordnet wird,
und/oder
- durch die Verbindungssteuerung (GK) die Zuordnung der dritten Rufnummer (RN3) zur ersten Netzwerk-Adresse und der vierten Zusatzinformation (P4) aufgehoben wird,
und/oder
- die Zuordnung der ersten Netzwerk-Adresse zur ersten Hardware-Adresse (MAC1) aufgehoben wird.

13. Kommunikationseinrichtung (KE) zum Aufbauen einer Verbindung über ein paketorientiertes Netzwerk (LAN) zu einer, an die Kommunikationseinrichtung (KE) gekoppelten, gerufenen Endeinrichtung (EE1), wobei der gerufenen Endeinrichtung (EE1) eine Rufnummer (RN1) zugeordnet ist, über die sie für eine Verbindung logisch adressierbar ist, der gerufenen Endeinrichtung (EE1) eine erste Hardware-Adresse (MAC1) zugeordnet ist, über die sie im Netzwerk (LAN) adressierbar ist, und der Kommunikationseinrichtung (KE) eine zweite Hardware-Adresse (MAC2) zugeordnet ist, über die die Kommunikationseinrichtung (KE) im Netzwerk (LAN) adressierbar ist,
mit
a) einer Servereinrichtung (SE) zum Aufrufen einer einer Zusatzinformation (P2) zugeordneten Weitervermittlungseinheit (WVE) infolge einer eingehenden, über die Rufnummer (RN1) adressierten Teilverbindung (RUF) und abhängig von der übermittelten Zusatzinformation (P2),
b) einer einer Zusatzinformation (P2) zugeordneten Weitervermittlungseinheit (WVE)
- zum Ermitteln der ersten Hardware-Adresse (MAC1) der gerufenen Endeinrichtung (EE1) und
- zum Weitervermitteln der Teilverbindung (RUF) zur gerufenen Endeinrichtung (EE1) anhand der ermittelten, ersten Hardware-Adresse (MAC1),
c) einer Netzwerk-Adressen-Ermittlungseinheit (NAE) zum Zuordnen der zweiten Hardware-Adresse (MAC2) zu einer Netzwerk-Adresse (IP1) und/oder zum Abfragen der Netzwerk-Adresse (IP1),
d) einer Anmeldeeinheit (ANPC) zum Übermitteln der Rufnummer (RN1), der Netzwerk-Adresse (IP1) und einer die Kommunikationseinrichtung (KE) ansteuernden Zusatzinformation (P2) in einer Registrierungsmeldung (M5) an eine Verbindungssteuerung (GK) im Rahmen eines Aktivierens der Kommunikationseinrichtung (KE),
und
e) einer Abmeldeeinheit (ABPC) zum Übermitteln der Rufnummer (RN1) und/oder der Netzwerk-Adresse (IP1) und der Zusatzinformation (P2) in einer Deregistrierungsmeldung (M6) an die Verbindungssteuerung (GK) im Rahmen eines Deaktivierens der Kommunikationseinrichtung (KE).

14. Endeinrichtung (EE1), die an eine Verbindungssteuerung (GK) über ein paketorientiertes Netzwerk LAN) und an eine Kommunikationseinrichtung (KE) gekoppelt ist, wobei der Endeinrichtung (EE1) eine Rufnummer (RN1) zugeordnet ist, über die sie für eine Verbindung logisch adressierbar ist, der Endeinrichtung (EE1) eine Hardware-Adresse (MAC1) zugeordnet ist, über die sie im Netzwerk (LAN) adressierbar ist, der Hardware-Adresse (MAC1) eine Netzwerk-Adresse (IP1) zugeordnet wird, und die Endeinrichtung (EE1) über eine Zusatzinformation (P1) ansteuerbar ist,
mit
a) einer Erkennungseinheit (ERK) zum Erkennen eines Aktivierens und/oder eines Deaktivierens der Kommunikationseinrichtung (KE) aufgrund
- einer eingehenden Meldung (M1) von der Kommunikationseinrichtung (KE) oder
- eines Empfangs oder Ausbleibens von Daten-Transportmeldungen von der Kommunikationseinrichtung (KE),
b) einer Anmeldeeinheit (ANEE) zum Übermitteln der Netzwerk-Adresse (IP1) und einer die Endeinrichtung (EE1) ansteuernde Zusatzinformation (P1) in einer Registrierungsmeldung (M2) an die Verbindungssteuerung (GK) abhängig vom Erkennen des Deaktivierens der Kommunikationseinrichtung (KE),
und
c) einer Abmeldeeinheit (ABEE) zum Übermitteln der Netzwerk-Adresse (IP1) und/oder der Zusatzinformation (P1) in einer Deregistrierungsmeldung (M10) an eine Verbindungssteuerung (GK) abhängig vom Erkennen des Aktivierens der Kommunikationseinrichtung (KE).

## Claims

1. Method for setting up a connection to a terminal device (EE1, EE2) which is coupled via a packet-switched network (LAN) with a communication device (KE) and a connection controller (GK), wherein
a) the terminal (EE1) is allocated a directory number (RN1) via which it can be addressed logically for a connection,
b) the terminal (EE1) is allocated a first hardware address (MAC1) via which it can be addressed in the network (LAN),
c) the communication device (KE) is allocated a second hardware address (MAC2) via which it can be addressed in the network (LAN),
d) a first network address (IP1) is allocated to the second hardware address (MAC2),
e) the first network address (IP1) and an additional information (P2) are allocated to the directory number (RN1) by the connection controller (GK),
f) the first hardware address (MAC1) is allocated to the additional information (P2) by the communication device (KE), and
g) the connection addressed by the directory number (RN1) is set up to the terminal device (EE1) in that
- the connection controller (GK) determines the first network address (IP1) allocated to the directory number (RN1) and the additional information (P2) allocated to the directory number (RN1),
- the second hardware address (MAC2) allocated to the determined first network address (IP1) is determined,
- from this a part connection (RUF) is set up to the communication device (KE) addressed by the determined second hardware address (MAC2), wherein the additional information (P2) determined is transmitted to the communication device (KE) within the part connection (RUF), and
- as a result of this part connection (RUF) and depending on the additional information (P2) transmitted, the first hardware address (MAC1) allocated to said information (P2) is determined and using this address (MAC1) the part connection (RUF) is routed by the communication device (KE) to the terminal device (EE1).

2. Method according to claim 1, **characterised in that** the communication device (KE) and the terminal (EE1) are contained in the same communication device (PC), the first and second hardware addresses (MAC1, MAC2) are the same and the connection (RUF) is routed to the terminal device (EE1) by the communication device (KE) by means of a message internal to the device.

3. Method according to any of the preceding claims, **characterised in that** on deactivation of the communication device (KE)
- the first network address (IP1) is allocated to the first hardware address (MAC1), and
- the first network address (IP1) and an additional information (P1) controlling the terminal device (EE1) are allocated to the directory number (RN1) by the connection controller (GK).

4. Method according to any of the preceding claims, **characterised in that** the communication device (KE) and the terminal device (EE1) are coupled so that the terminal device (EE1) detects activation and/or deactivation of the communication device (KE).

5. Method according to any of the preceding claims, **characterised in that**
a) on deactivation of the communication device (KE), the connection controller (GK) is sent
- a message (M6) to release the directory number (RN1), and
- a message (M10) to allocate the directory number (RN1) to the first network address (IP1) and to an additional information (P1) controlling the terminal device (EE1),
and/or
b) on activation of the communication device (KE), the connection controller (GK) is sent
- a message (M2) to release the directory number (RN1), and
- a message (M5) to allocate the directory number (RN1) to the first network address (IP1) and to an additional information (P2) controlling the communication device (KE).

6. Method according to any of the preceding claims, **characterised in that**
a) on deactivation of the communication device (KE)
- the first network address (IP1) is allocated to the first hardware address (MAC1), and
- the directory number (RN1) is allocated to the first network address (IP1) and to an additional information (P1) controlling the terminal device (EE1) by the connection controller (GK),
and/or
b) on activation of the communication device (KE)
- the first network address (IP1) is allocated to the second hardware address (MAC2), and
- the directory number (RN1) is allocated to the first network address (IP1) and to an additional information (P2) controlling the communication device (KE) by the connection controller (GK).

7. Method according to any of the preceding claims, **characterised in that** an address server (DHCP) is provided to monitor and allot network addresses (IP1, IP2, IP3), wherein
a) on deactivation of the communication device (KE), the address server (DHCP) is sent
- by the communication device (KE) a message (M7) to release the first network address (IP1), and
- a message (M9) to allocate the first network address (IP1) to the first hardware address (MAC1),
and/or
b) on activation of the communication device (KE), the address server (DHCP) is sent
- by the terminal device (EE1) a message (M3) to release the first network address (IP1), and
- a message (M4) to allocate the first network address (IP1) to the second hardware address (MAC2).

8. Method according to any of the preceding claims, **characterised in that** a second terminal device is a terminal device according to claim 1, wherein
- the second terminal device (EE2) has a third hardware address (EEA2) instead of the first hardware address,
- also allocated to the directory number (RN1) are the first network address (IP1) and a second additional information instead of the additional information according to claim 1, and
- a connection addressed via the directory number (RN1) is also set up to the second terminal device (EE2).

9. Method according to claim 8, **characterised in that** an outgoing connection from the terminal device (EE1) and/or the second terminal device (EE2) signals the directory number (RN1) as the outgoing directory number.

10. Method according to any of claims 8 or 9, **characterised in that**
a) to set up a second connection to the second terminal device
- the connection controller (GK) allocates the first network address (IP1) and a third additional information (P3) to the second directory number (RN2),
- the communication device (KE) allocates the third hardware address (EEA2) to the third additional information (P3), and
- the second connection addressed via the second directory number (RN2) is set up according to the method steps of claim 1 to the second terminal device (EE2), **in that** using the third additional information (P3) which is transmitted as part of the connection set up and to which the third hardware address (EEA2) of the second terminal (EE2) is allocated, the third hardware address (EEA2) is determined and using this the part connection (RUF) is routed by the communication device (KE) to the second terminal device (EE2),
and/or
b) to set up a third connection to the terminal device (EE1)
- the connection controller (GK) allocates the first network address and a fourth additional information to a third directory number (RN3),
- the communication device (KE) allocates the first hardware address (MAC1) to the fourth additional information, and
- the third connection addressed via the third directory number (RN3) according to the method steps of claim 1 is set up to the terminal device (EE1) **in that** using the fourth additional information which was transmitted during setup of the connection (RUF) and to which is allocated the first hardware address (MAC1) of the terminal (EE1), the first hardware address (MAC1) is determined and using this the part connection (RUF) is routed by the communication device (KE) to the terminal device (EE1).

11. Method according to claim 10, **characterised in that** on deactivation of the communication device (KE)
- a second network address (IP2) is allocated to the first hardware address (MAC1), and
- the second network address (IP2) and a fourth additional information (P4) controlling the terminal device (EE1) are allocated to the third directory number (RN3) by the connection controller (GK),
and/or
- the connection controller (GK) eliminates the allocation of the second directory number (RN2) to the network address (IP1) and the third additional information (P3),
and/or
- the allocation of the network address (IP1) to the second hardware address (MAC2) is eliminated.

12. Method according to any of claims 10 or 11, **characterised in that** on activation of the communication device (KE)
- a third network address is allocated to the second hardware address (MAC2),
- the connection controller (GK) allocates the third network address and a third additional information (P3) to the second directory number (RN2), and
- the communication device (KE) allocates the third hardware address (EE2A) to the third additional information (P3),
and/or
- the connection controller (GK) eliminates the allocation of the third directory number (RN3) to the first network address and the fourth additional information (P4),
and/or
- the allocation of the first network address to the first hardware address (MAC1) is eliminated.

13. Communication device (KE) to construct a connection via a packet-switched network (LAN) to a called terminal device (EE1) coupled to the communication device (KE), wherein the called terminal device (EE1) is allocated a directory number (RN1) via which it can be addressed logically for a connection, the called terminal (EE1) is allocated a first hardware address (MAC1) via which it can be addressed in the network (LAN), and the communication device (KE) is allocated a second hardware address (MAC2) via which the communication device (KE) can be addressed in the network (LAN), with
a) a server device (SE) for calling a switching unit (WVE) allocated to an additional information (P2) as a result of an incoming part connection (RUF) addressed via the directory number (RN1) and depending on the additional information (P2) transmitted,
b) a switching unit (WVE) allocated to additional information (P2)
- to determine the first hardware address (MAC1) of the called terminal device (EE1), and
- to route the part connection (RUF) to the called terminal device (EE1) using the first hardware address (MAC1) determined,
c) a network address determination unit (NAE) to allocate the second hardware address (MAC2) to a network address (IP1) and/or to query the network address (IP1),
d) a log on unit (ANPC) to transmit the directory number (RN1), the network address (IP1) and an additional information (P2) controlling the communication device (KE) in a registration message (M5) to a connection controller (GK) as part of activation of the communication device (KE), and
e) a log off unit (APBC) to transmit the directory number (RN1) and/or the network address (IP1) and the additional information (P2) in a deregistration message (M6) to the connection controller (GK) as part of a deactivation of the communication device (KE).

14. Terminal device (EE1) which is coupled to a connection controller (GK) via a packet-switched network (LAN) and to a communication device (KE), wherein the terminal device (EE1) is allocated a directory number (RN1) via which it can be addressed logically for a connection, the terminal device (EE1) is allocated a hardware address (MAC1) via which it can be addressed in the network (LAN), a network address (IP1) is allocated to the hardware address (MAC1) and the terminal device (EE1) can be controlled via an additional information (P1), with
a) a detection unit (ERK) to detect an activation and/or deactivation of the communication device (KE) based on
- an incoming message (M1) from the communication device (KE), or
- reception or absence of data transport messages from the communication device (KE),
b) a log on unit (ANEE) to transmit the network address (IP1) and an additional information (P1) controlling the terminal device (EE1) in a registration message (M2) to the connection controller (GK) depending on detection of deactivation of the communication device (KE), and
c) a log off unit (ABEE) to transmit the network address (IP1) and/or the additional information (P1) in a deregistration message (M10) to a connection controller (GK) depending on detection of activation of the communication device (KE).

## Revendications

1. Procédé pour établir une liaison à un terminal (EE1, EE2), qui est couplé par le biais d'un réseau orienté paquets (LAN) à un dispositif de communication (KE) et à un dispositif de commande de liaison (GK), sachant que
a) le terminal (EE1) se voit attribuer un numéro d'appel (RN1) par le biais duquel il peut être adressé logiquement pour une liaison,
b) le terminal (EE1) se voit attribuer une première adresse matérielle (MAC1) par le biais de laquelle il peut être adressé dans le réseau (LAN),
c) le dispositif de communication (KE) se voit attribuer une deuxième adresse matérielle (MAC2) par le biais de laquelle il peut être adressé dans le réseau (LAN),
d) une première adresse de réseau (IP1) est attribuée à la deuxième adresse matérielle (MAC2),
e) la première adresse de réseau (IP1) ainsi qu'une information supplémentaire (P2) est attribuée au numéro d'appel (RN1) par le dispositif de commande de liaison (GK) ,
f) la première adresse matérielle (MAC1) est attribuée à l'information supplémentaire (P2) par le dispositif de communication (KE) et
g) la liaison au terminal (EE1) adressée par le biais du numéro d'appel (RN1) est établie du fait que
- le dispositif de commande de liaison (GK) détermine la première adresse de réseau (IP1) attribuée au numéro d'appel (RN1) et l'information supplémentaire (P2) attribuée au numéro d'appel (RN1),
- on détermine la deuxième adresse matérielle (MAC2) attribuée à la première adresse de réseau (IP1) déterminée,
- à l'aide de celles-ci, une liaison partielle (RUF) est établie au dispositif de communication (KE) adressé par la deuxième adresse matérielle (MAC2) déterminée, l'information supplémentaire (P2) déterminée étant transmise au dispositif de communication (KE) dans le cadre de la liaison partielle (RUF), et
- suite à cette liaison partielle (RUF) et en fonction de l'information supplémentaire (P2) transmise, la première adresse matérielle (MAC1) attribuée à ladite liaison partielle est déterminée et avec celle-ci, la liaison partielle (RUF) est transférée au terminal (EE1) par le dispositif de communication (KE).

2. Procédé selon la revendication 1,
**caractérisé en ce que**,
le dispositif de communication (KE) et le terminal (EE1) sont contenus dans le même appareil de communication (PC), les première et deuxième adresses matérielles (MAC1, MAC2) sont identiques, et **en ce que** le transfert de la liaison (RUF) au terminal (EE1) est effectué par le dispositif de communication (KE) au moyen d'un message interne à l'appareil.

3. Procédé selon l'une quelconque des revendications précédentes,
**caractérisé en ce que**,
en cas de désactivation du dispositif de communication (KE),
- la première adresse de réseau (IP1) est attribuée à la première adresse matérielle (MAC1), et
- la première adresse de réseau (IP1) ainsi qu'une information supplémentaire (P1) commandant le terminal (EE1) sont attribuées au numéro d'appel (RN1) par le dispositif de commande de liaison (GK).

4. Procédé selon l'une quelconque des revendications précédentes,
**caractérisé en ce que**
le dispositif de communication (KE) et le terminal (EE1) sont couplés de sorte que le terminal (EE1) détecte une activation et/ou une désactivation du dispositif de communication (KE).

5. Procédé selon l'une quelconque des revendications précédentes,
**caractérisé en ce que**
a) lors de la désactivation du dispositif de communication (KE),
- un message (M6) pour libérer le numéro d'appel (RN1) est transmis au dispositif de commande de liaison (GK),
et
- un message (M10) pour attribuer le numéro d'appel (RN1) à la première adresse de réseau (IP1) et à une information supplémentaire (P1) commandant le terminal (EE1) est transmis au dispositif de commande de liaison (GK)
et/ou
b) lors de l'activation du dispositif de communication (KE)
- un message (M2) pour libérer le numéro d'appel (RN1) est transmis au dispositif de commande de liaison (GK) et
- un message (M5) pour attribuer le numéro d'appel (RN1) à la première adresse de réseau (IP1) et à une information supplémentaire (P2) commandant le dispositif de communication (KE) est transmis au dispositif de commande de liaison (GK).

6. Procédé selon l'une quelconque des revendications précédentes,
**caractérisé en ce que**,
a) lors de la désactivation du dispositif de communication (KE)
- la première adresse de réseau (IP1) est attribuée à la première adresse matérielle (MAC1), et
- le numéro d'appel (RN1) est attribué par le dispositif de commande de liaison (GK) à la première adresse de réseau (IP1) et à une information supplémentaire (P1) commandant le terminal (EE1),
et/ou
b) lors de l'activation du dispositif de communication (KE)
- la première adresse de réseau (IP1) est attribuée à la deuxième adresse matérielle (MAC2), et
- le numéro d'appel (RN1) est attribué par le dispositif de commande de liaison (GK) à la première adresse de réseau (IP1) et à une information supplémentaire (P2) commandant le dispositif de communication (KE).

7. Procédé selon l'une quelconque des revendications précédentes,
**caractérisé en ce que**,
un serveur d'adresses (DHCP) est prévu pour gérer et assigner des adresses de réseau (IP1, IP2, IP3), sachant que
a) en cas de désactivation du dispositif de communication (KE)
- un message (M7) pour libérer la première adresse de réseau (IP1) est transmis par le dispositif de communication (KE) au serveur d'adresses (DHCP), et
- un message (M9) pour attribuer la première adresse de réseau (IP1) à la première adresse matérielle (MAC1) est transmis au serveur d'adresses (DHCP),
et/ou
b) lors de l'activation du dispositif de communication (KE)
- un message (M3) pour libérer la première adresse de réseau (IP1) est transmis par le terminal (EE1) au serveur d'adresses (DHCP), et
- un message (M4) pour attribuer la première adresse de réseau (IP1) à la deuxième adresse matérielle (MAC2) est transmis au serveur d'adresses (DHCP).

8. Procédé selon l'une quelconque des revendications précédentes,
**caractérisé en ce que**,
un deuxième terminal est un terminal selon la revendication 1, sachant que
- le deuxième terminal (EE2) comporte une troisième adresse matérielle (EEA2) au lieu de la première adresse matérielle,
- la première adresse de réseau (IP1) et une deuxième information supplémentaire au lieu de l'information supplémentaire selon la revendication 1 sont attribuées en plus au numéro d'appel (RN1), et
- une liaison adressée par le biais du numéro d'appel (RN1) est établie en plus au deuxième terminal (EE2).

9. Procédé selon la revendication 8,
**caractérisé en ce que**,
en cas d'une liaison partant du terminal (EE1) et/ou du deuxième terminal (EE2), le numéro d'appel (RN1) est signalisé en tant que numéro d'appel d'origine.

10. Procédé selon l'une des revendications 8 ou 9, **caractérisé en ce que**,
a) pour établir une deuxième liaison au deuxième terminal
- la première adresse de réseau (IP1) ainsi qu'une troisième information supplémentaire (P3) sont attribuées par le dispositif de commande de liaison (GK) à un deuxième numéro d'appel (RN2),
- la troisième adresse matérielle (EEA2) est attribuée par le dispositif de communication (KE) à la troisième information supplémentaire (P3), et
- la deuxième liaison adressée par le biais du deuxième numéro d'appel (RN2) est établie au deuxième terminal (EE2) selon des étapes du procédé de la revendication 1, par le fait que la troisième adresse matérielle (EEA2) est déterminée à l'aide de la troisième information supplémentaire (P3) transmise dans le cadre d'un établissement de la liaison auquel est attribuée la troisième adresse matérielle (EEA2) du deuxième terminal (EE2), et par le fait que la liaison partielle (RUF) avec ladite troisième adresse matérielle est transférée au deuxième terminal (EE2) par le dispositif de communication (KE),
et/ou
b) pour établir une troisième liaison au terminal (EE1)
- la première adresse de réseau ainsi qu'une quatrième information supplémentaire sont attribuées par le dispositif de commande de liaison (GK) à un troisième numéro d'appel (RN3),
- la première adresse matérielle (MAC1) est attribuée par le dispositif de communication (KE) à la quatrième information supplémentaire, et
- la troisième liaison adressée par le biais du troisième numéro d'appel (RN3) est établie au terminal (EE1) selon les étapes du procédé de la revendication 1 par le fait que la première adresse matérielle (MAC1) est déterminée à l'aide de la quatrième information supplémentaire transmise dans le cadre d'un établissement de la liaison (RUF) auquel est attribuée la première adresse matérielle (MAC1) du terminal (EE1) et par le fait que la liaison partielle (RUF) avec ladite première adresse matérielle (MAC1) est transférée au terminal (EE1) par le dispositif de communication (KE).

11. Procédé selon la revendication 10,
**caractérisé en ce que**,
en cas de désactivation du dispositif de communication (KE)
- une deuxième adresse de réseau (IP2) est attribuée à la première adresse matérielle (MAC1), et
- la deuxième adresse de réseau (IP2) ainsi qu'une quatrième information supplémentaire (P4) commandant le terminal (EE1) sont attribuées par le dispositif de commande de liaison (GK) au troisième numéro d'appel (RN3), et/ou
- l'attribution du deuxième numéro d'appel (RN2) à l'adresse de réseau (IP1) et de la troisième information supplémentaire (P3) est annulée par le dispositif de commande de liaison (GK),
et/ou
- l'attribution de l'adresse de réseau (IP1) à la deuxième adresse matérielle (MAC2) est annulée.

12. Procédé selon l'une des revendications 10 ou 11, **caractérisé en ce que**,
lors d'une activation du dispositif de communication (KE)
- une troisième adresse de réseau est attribuée à la deuxième adresse matérielle (MAC2),
- la troisième adresse de réseau ainsi qu'une troisième information supplémentaire (P3) sont attribuées par le dispositif de commande de liaison (GK) au deuxième numéro d'appel (RN2), et
- la troisième adresse matérielle (EE2A) est attribuée par le dispositif de communication (KE) à la troisième information supplémentaire (P3),
et/ou
- l'attribution du troisième numéro d'appel (RN3) à la première adresse de réseau et de la quatrième information supplémentaire (P4) est annulée par le dispositif de commande de liaison (GK),
et/ou
- l'attribution de la première adresse de réseau à la première adresse matérielle (MAC1) est annulée.

13. Dispositif de communication (KE) pour établir une liaison par le biais d'un réseau orienté paquets (LAN) à un terminal (EE1) appelant couplé au dispositif de communication (KE), sachant que le terminal (EE1) appelant se voit attribuer un numéro d'appel (RN1) par lequel il peut être adressé logiquement pour une liaison, le terminal (EE1) appelant se voit attribuer une première adresse matérielle (MAC1) par laquelle il peut être adressé dans le réseau (LAN), et le dispositif de communication (KE) se voit attribuer une deuxième adresse matérielle (MAC2) par laquelle le dispositif de communication (KE) peut être adressé dans le réseau (LAN), comportant
a) un dispositif serveur (SE) destiné à appeler une unité de transfert (WVE) attribuée à une à une information supplémentaire (P2) suite à une liaison partielle (RUF) arrivante adressée par le biais du numéro d'appel (RN1) et en fonction de l'information supplémentaire (P2) transmise,
b) une unité de transfert (WVE) attribuée à une information supplémentaire (P2)
- destinée à déterminer la première adresse matérielle (MAC1) du terminal appelant (EE1) et
- destinée à transférer la liaison partielle (RUF) au terminal appelant (EE1) à l'aide de la première adresse matérielle déterminée (MAC1),
c) une unité de détermination d'adresse de réseau (NAE) destinée à attribuer la deuxième adresse matérielle (MAC2) à une adresse de réseau (IP1) et/ou destinée à interroger l'adresse de réseau (IP1),
d) une unité d'enregistrement (ANPC) destinée à transmettre le numéro d'appel (RN1), l'adresse de réseau (IPI) et une information supplémentaire (P2) commandant le dispositif de communication (KE) dans un message d'enregistrement (M5) à un dispositif de commande de liaison (GK) dans le cadre d'une activation du dispositif de communication (KE),
et
e) une unité de désenregistrement (ABPC) destinée à transmettre le numéro d'appel (RN1) et/ou l'adresse de réseau (IP1) et l'information supplémentaire (P2) dans un message de désenregistrement (M6) au dispositif de commande de liaison (GK) dans le cadre d'une désactivation du dispositif de communication (KE).

14. Terminal (EE1), qui est couplé à un dispositif de commande de liaison (GK) par le biais d'un réseau (LAN) orienté paquets et à un dispositif de communication (KE), sachant que le terminal (EE1) s'est vu attribuer un numéro d'appel (RN1) par le biais duquel il peut être adressé logiquement pour une liaison, le terminal (EE1) s'est vu une adresse matérielle (MAC1) par le biais de laquelle il est adressable dans le réseau (LAN), une adresse de réseau (IP1) est attribuée à l'adresse matérielle (MAC1) et le terminal (EE1) peut être commandé par le biais d'une information supplémentaire (P1), comportant
a) une unité de détection (ERK) destinée à détecter une activation et/ou une désactivation du dispositif de communication (KE) en raison
- d'un message (M1) arrivant du dispositif de communication (KE) ou
- d'une réception ou d'une non-réception de messages de transport de données du dispositif de communication (KE),
b) une unité d'enregistrement (ANEE) destinée à transmettre l'adresse de réseau (IP1) et une information supplémentaire (P1) commandant le terminal (EE1) dans un message d'enregistrement (M2) au dispositif de commande de liaison (GK) en fonction de la détection de la désactivation du dispositif de communication (KE),
et
c) une unité de désenregistrement (ABEE) destinée à transmettre l'adresse de réseau (IP1) et/ou l'information supplémentaire (P1) dans un message de désenregistrement (M10) à un dispositif de commande de liaison (GK) en fonction de la détection de l'activation du dispositif de communication (KE).
